(19) **Europäisches Patentamt / European Patent Office / Office européen des brevets**

(11) **EP 4 773 093 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
$G06V\ 10/70^{(2022.01)}$  $G06V\ 10/82^{(2022.01)}$
$H04N\ 23/955^{(2023.01)}$  $G06V\ 10/147^{(2022.01)}$
$G06V\ 10/774^{(2022.01)}$  $G06V\ 40/10^{(2022.01)}$
$H04N\ 23/55^{(2023.01)}$  $G06T\ 7/00^{(2017.01)}$

(21) Application number: 24859949.0

(22) Date of filing: 30.08.2024

(52) Cooperative Patent Classification (CPC):
G06V 10/82; G06T 7/00; G06V 10/147;
G06V 10/70; G06V 10/774; G06V 40/10;
H04N 23/55; H04N 23/955

(86) International application number:
PCT/JP2024/031136

(87) International publication number:
WO 2025/047924 (06.03.2025 Gazette 2025/10)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 30.08.2023 JP 2023140391

(71) Applicants:
• Sony Semiconductor Solutions Corporation
Atsugi-shi, Kanagawa 243-0014 (JP)
• Sony Group Corporation
Tokyo 108-0075 (JP)

(72) Inventors:
• NAKAMURA, Shigeki
Atsugi-shi, Kanagawa 243-0014 (JP)

• NISHIDA, Sho
Tokyo 108-0075 (JP)
• UEMURA, Ryosuke
Atsugi-shi, Kanagawa 243-0014 (JP)
• OTSUKI, Seichi
Atsugi-shi, Kanagawa 243-0014 (JP)
• GOMI, Shinichiro
Atsugi-shi, Kanagawa 243-0014 (JP)
• MORIYAMA, Toru
Atsugi-shi, Kanagawa 243-0014 (JP)
• KASHIMORI, Masaki
Atsugi-shi, Kanagawa 243-0014 (JP)

(74) Representative: MFG Patentanwälte
Meyer-Wildhagen Meggle-Freund
Gerhard PartG mbB
Amalienstraße 62
80799 München (DE)

(54) **NON-TEMPORARY COMPUTER-READABLE STORAGE MEDIUM, IMAGE PROCESSING METHOD, AND IMAGE PROCESSING SYSYTEM**

(57) A non-transitory computer-readable storage medium storage computer-readable instructions thereon which, when executed by an information processing system, cause the information processing system to perform a method, wherein the method includes receiving an encoded image of a subject captured by a lensless image sensor, and extracting by a trained machine learning model information from the encoded image.

FIG.2

100

OPTICAL MODULA-TION UNIT (11) → PIXEL UNIT (12) → INFOR-MATION EXTRAC-TION UNIT (30) → DESIRED INFORMA-TION

EP 4 773 093 A1

**Description**

[Technical Field]

The present disclosure relates to a non-transitory computer-readable storage medium, an image processing method, and an image processing system.

[Background Art]

A lensless image sensor has been provided which includes an optical modulation element in which a known two-dimensional pattern including an amplitude modulation region or a phase modulation region of light is formed in a preceding stage in an optical axis direction of an imaging element (see, for example, Patent Literature 1).

The lensless image sensor projects, on the imaging element, encoded light under the effect of the characteristic two-dimensional pattern of the optical modulation element, and generates a decoded image of a subject by performing inverse operation of the effect of a mask.

Meanwhile, there is a technology of using artificial intelligence (AI) for image recognition/detection to extract desired information from an image captured by a general image sensor that receives light entering through a lens to capture an image with an imaging element.

[Citation List]

[Patent Literature]

[PTL 1]
WO 2019/176349 A

[Summary of Invention]

[Technical Problem]

However, image information itself is different between a captured image captured by a lensless image sensor and an image captured by a general image sensor. Therefore, in image recognition AI that extracts information from an image captured by a general image sensor may not be able to extract desired information from an image captured by a lensless image sensor.

To address this, the present disclosure proposes a non-transitory computer-readable storage medium, an image processing method, and an image processing system capable of extracting desired information from an image captured by a lensless image sensor.

[Solution to Problem]

A non-transitory computer-readable storage medium storage computer-readable instructions thereon which, when executed by an information processing system, cause the information processing system to perform a method, the method comprising receiving an encoded image of a subject captured by a lensless image sensor; and extracting by a trained machine learning model information from the encoded image.

[Brief Description of Drawings]

[Fig. 1]

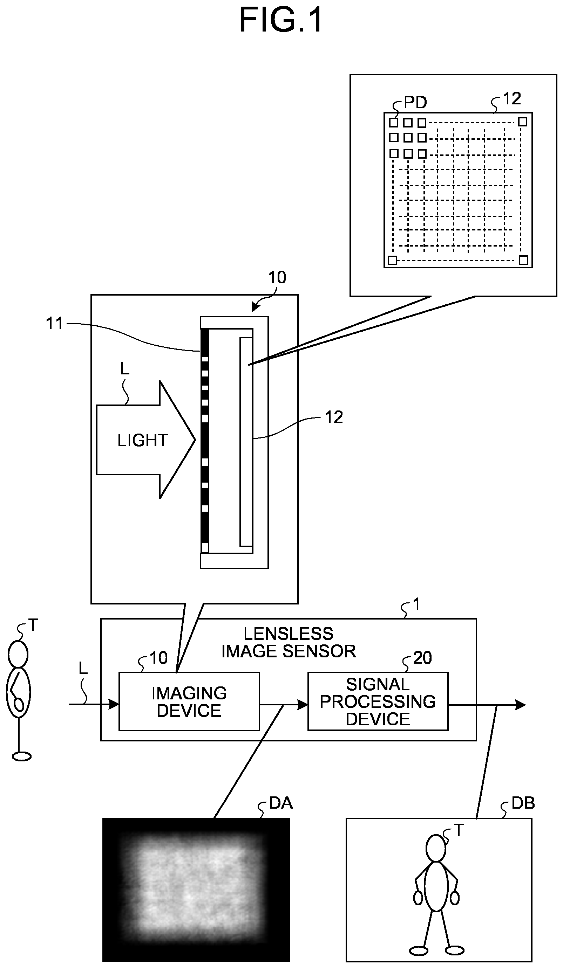

Fig. 1 is a diagram for explanation of the configuration and operation of a general lensless image sensor.
[Fig. 2]

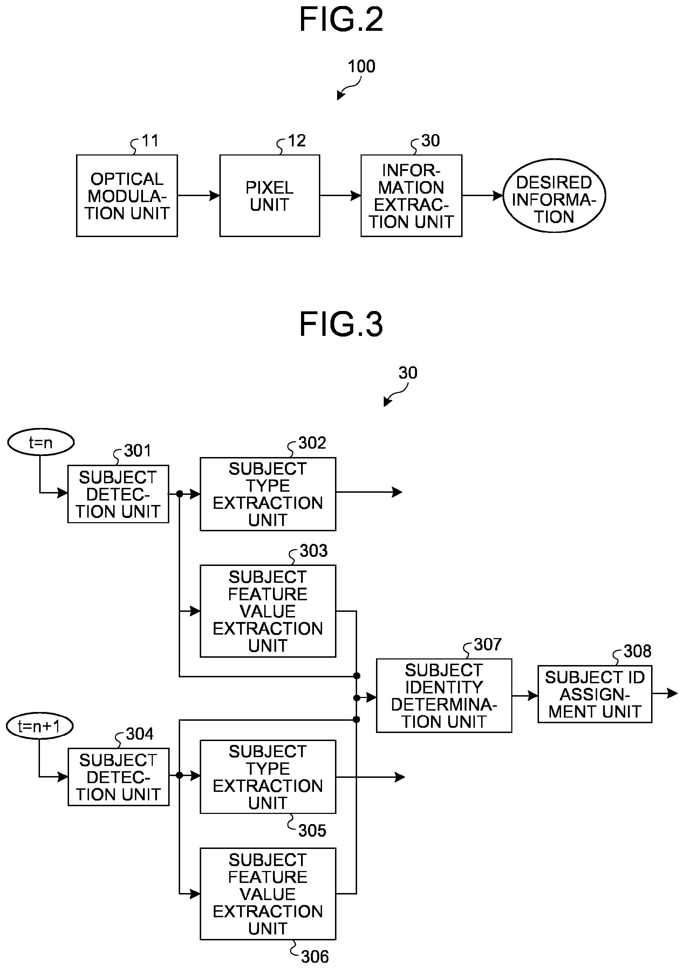

Fig. 2 is a functional block diagram illustrating an example of the configuration of an information processing system according to an embodiment.
[Fig. 3]
Fig. 3 is a block diagram illustrating an example of the configuration of an information extraction unit according to an embodiment.
[Fig. 4]

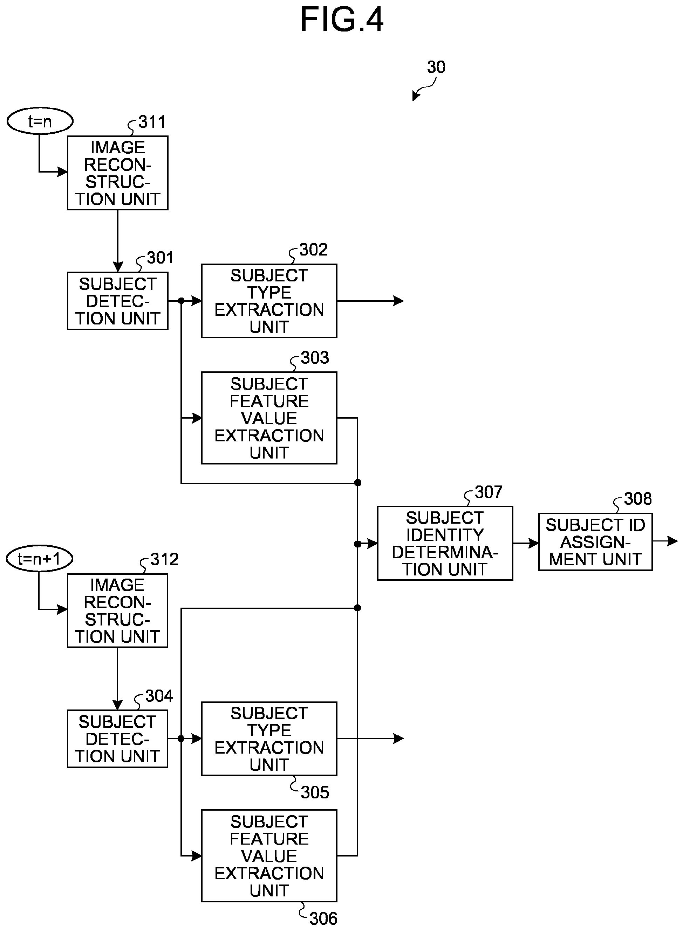

Fig. 4 is a block diagram illustrating another example of the configuration of an information extraction unit according to an embodiment.

[Fig. 5]

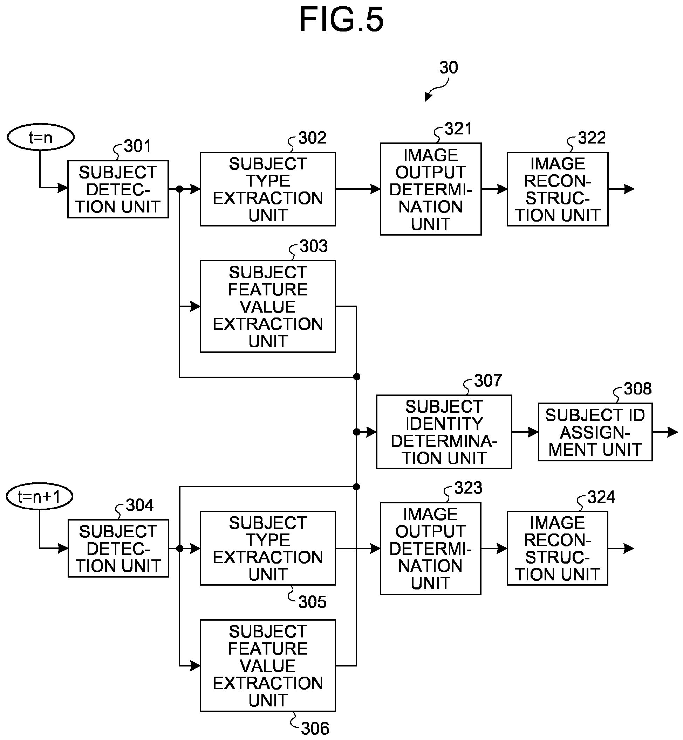

Fig. 5 is a block diagram illustrating another example of the configuration of an information extraction unit according to an embodiment.

[Fig. 6]

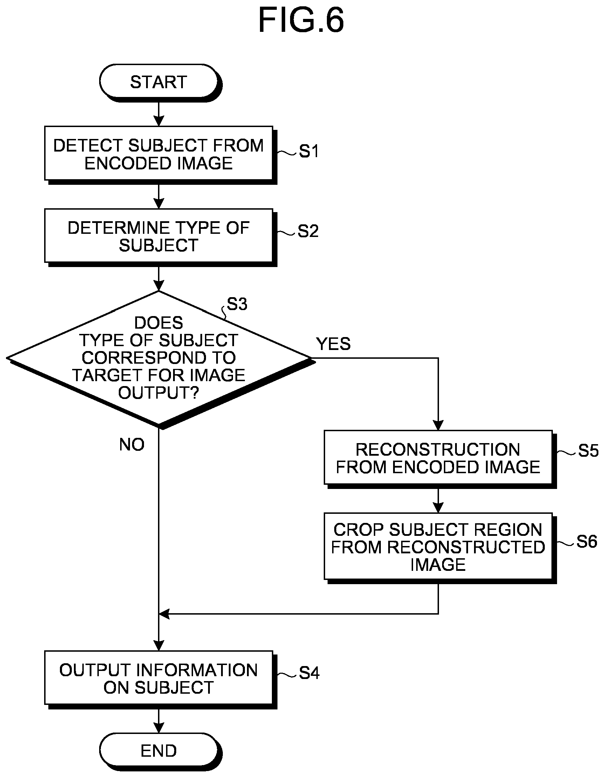

Fig. 6 is a flowchart illustrating an example of processing executed by the information extraction unit illustrated in Fig. 5.

[Fig. 7]

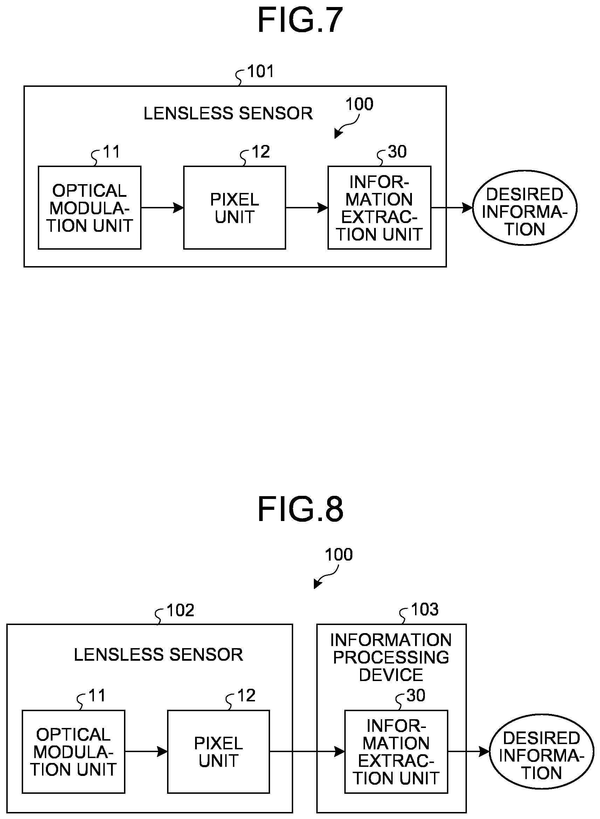

Fig. 7 is a diagram illustrating an example of the hardware configuration of the information processing system according to an embodiment.

[Fig. 8]

Fig. 8 is a diagram illustrating an example of the hardware configuration of the information processing system according to an embodiment.

[Fig. 9]

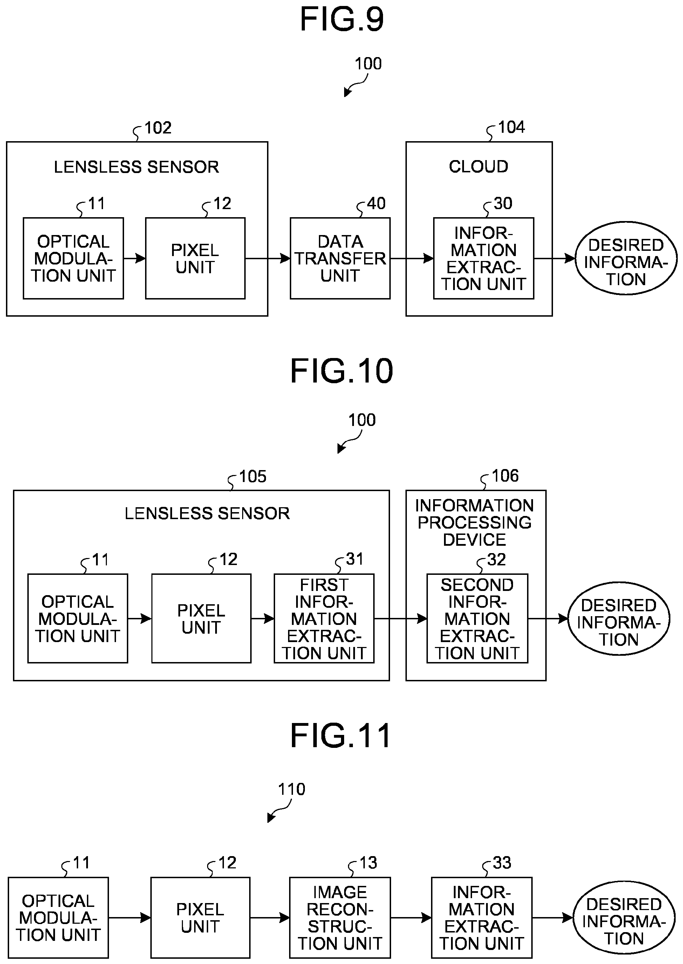

Fig. 9 is a diagram illustrating an example of the hardware configuration of the information processing system according to an embodiment.

[Fig. 10]

Fig. 10 is a diagram illustrating an example of the hardware configuration of the information processing system according to an embodiment.

[Fig. 11]

Fig. 11 is a diagram illustrating an example of the hardware configuration of the information processing system according to an embodiment.

[Fig. 12]

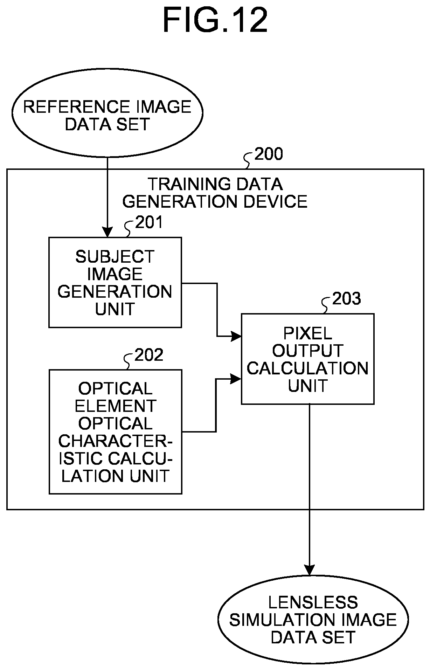

Fig. 12 is a functional block diagram illustrating an example of the configuration of a training data generation device according to an embodiment.

[Fig. 13]

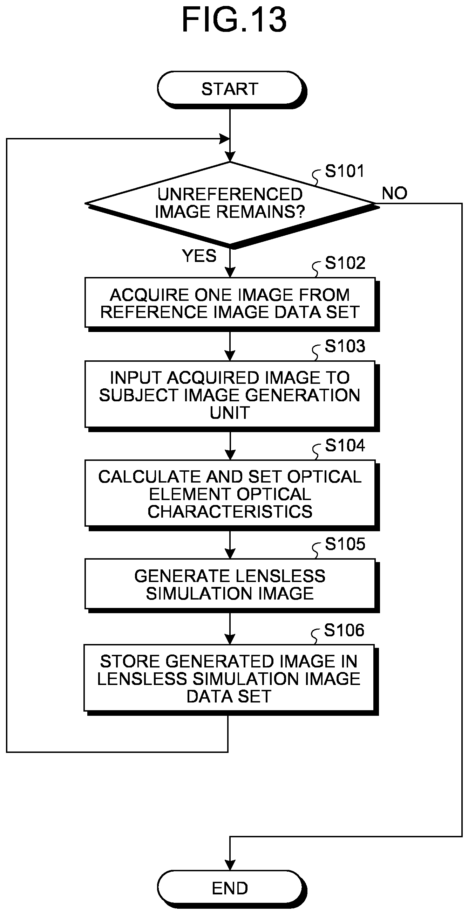

Fig. 13 is a flowchart illustrating an example of processing executed by an image data generation device according to an embodiment.

[Fig. 14]

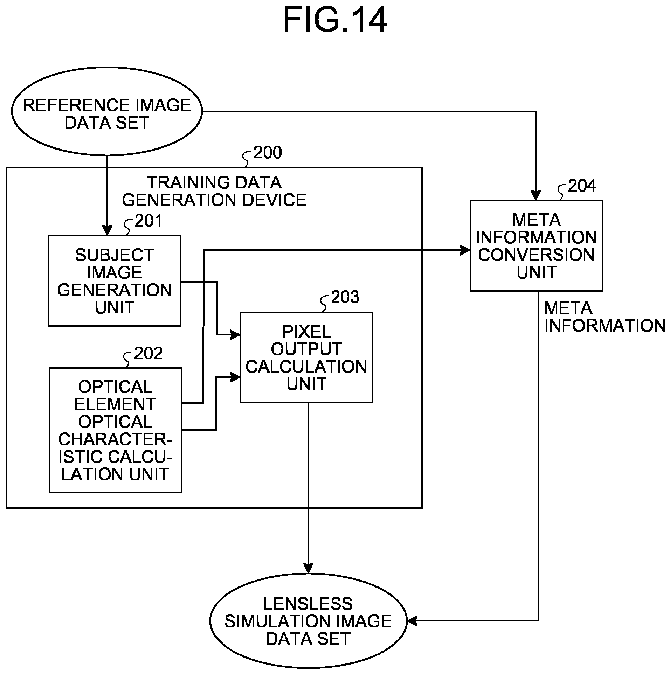

Fig. 14 is a functional block diagram illustrating another example of the configuration of a training data generation device according to an embodiment.

[Fig. 15]

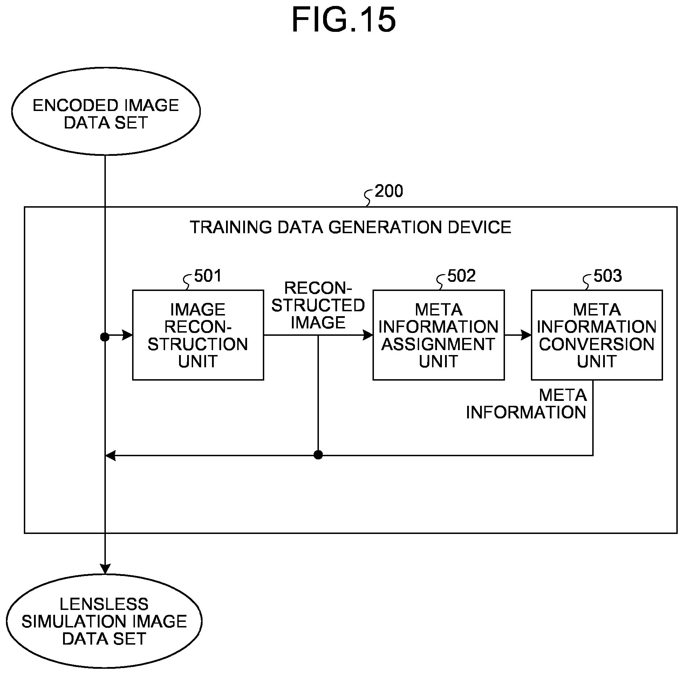

Fig. 15 is a functional block diagram illustrating another example of the configuration of a training data generation device according to an embodiment.

[Fig. 16]

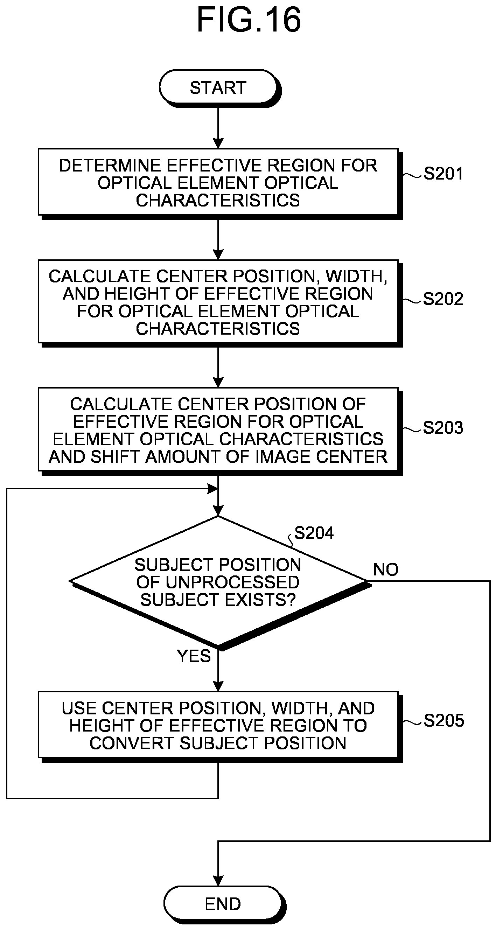

Fig. 16 is a flowchart illustrating an example of processing executed by a meta information conversion unit according to an embodiment.

[Fig. 17]

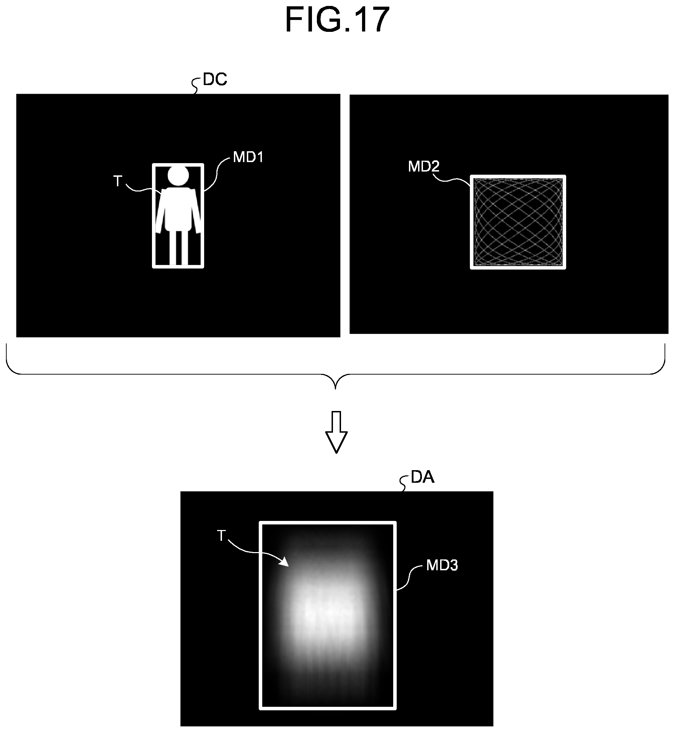

Fig. 17 is a diagram for explanation of an example of a method for converting meta information according to an embodiment.

[Fig. 18]

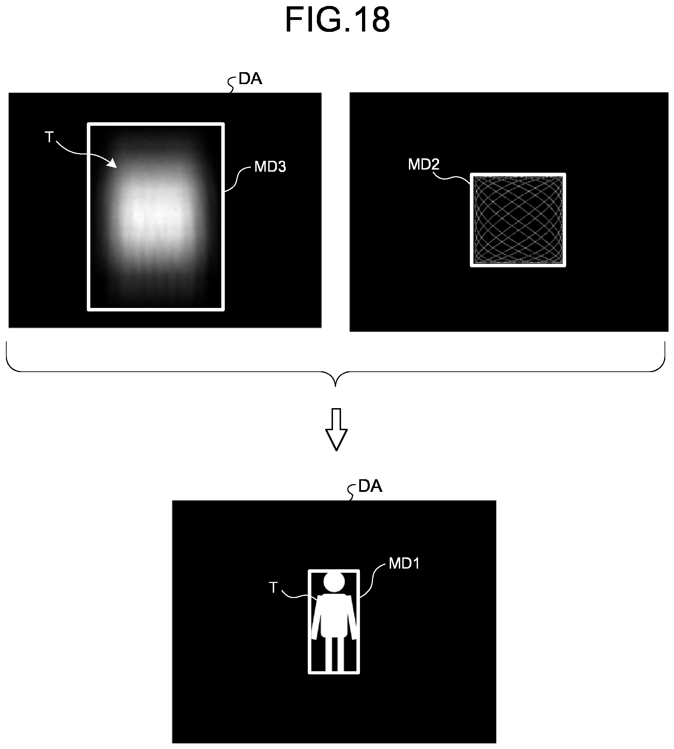

Fig. 18 is a diagram for explanation of an example of a method for converting meta information according to an embodiment.

[Fig. 19]

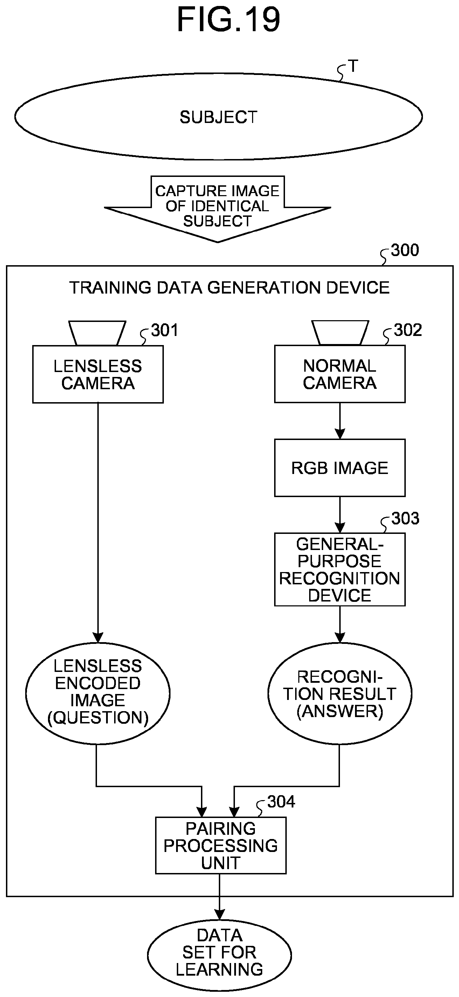

Fig. 19 is a functional block diagram illustrating another example of the configuration of a training data generation device according to an embodiment.

[Fig. 20]

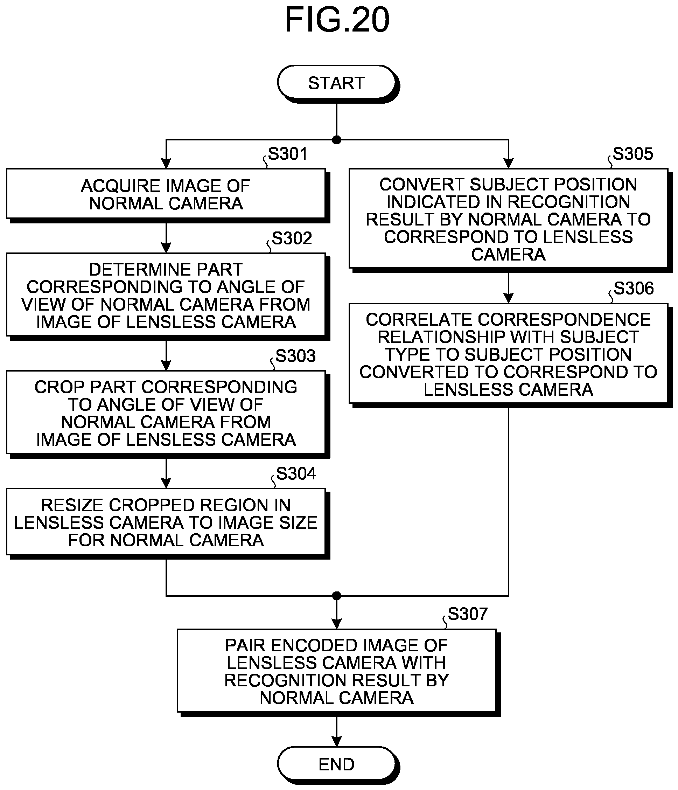

Fig. 20 is a flowchart illustrating an example of processing executed by a pairing processing unit illustrated in Fig. 19.

[Fig. 21]

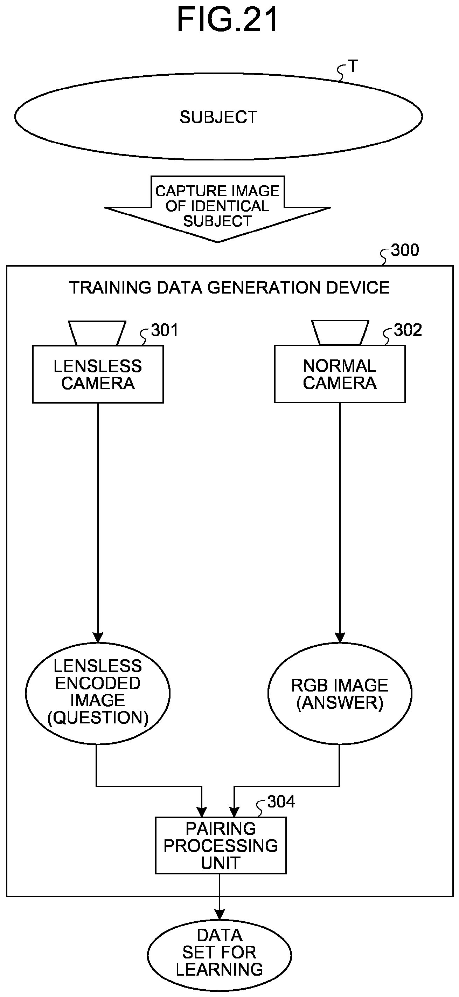

Fig. 21 is a functional block diagram illustrating another example of the configuration of a training data generation device according to an embodiment.

[Fig. 22]

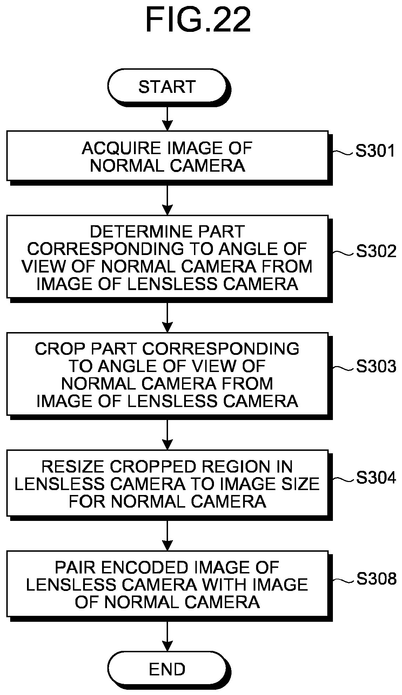

Fig. 22 is a flowchart illustrating an example of processing executed by a pairing processing unit illustrated in Fig. 21.

[Fig. 23]

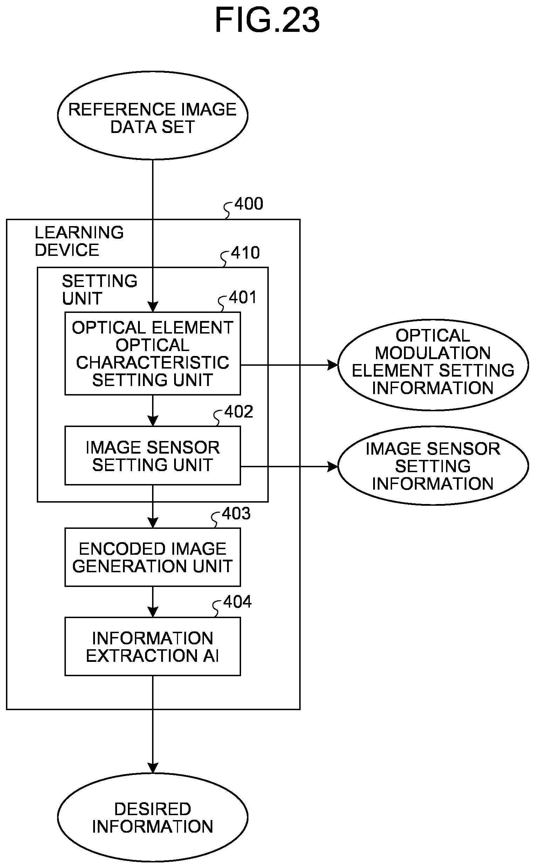

Fig. 23 is a diagram for explanation of a learning device according to an embodiment.

[Description of Embodiments]

Hereinafter, embodiments of the present disclosure are described in detail with reference to the drawings. In the following embodiments, the same parts are denoted with the same reference numerals and repeated explanation of these parts is omitted.

[1. Outline of Lensless Image Sensor]

First, an outline of a general lensless image sensor will be described with reference to Fig. 1. Fig. 1 is a diagram for explanation of the configuration and operation of a general lensless image sensor.

The lensless image sensor (hereinafter, referred to as a "lensless sensor 1") illustrated in Fig. 1 is a so-called lensless camera that does not need, for image capturing, a lens for condensing light emitted from each point of a subject at each corresponding point on the sensor.

As illustrated in Fig. 1, the lensless sensor 1 includes an imaging device 10 and a signal processing device 20. The imaging device 10 includes an optical modulation unit 11 and a pixel unit 12. The optical modulation unit 11 is provided in a preceding stage in the optical axis direction of the pixel unit 12. The optical modulation unit 11 includes a mask on which a known two-dimensional pattern including an amplitude modulation region or a phase modulation region of light is formed.

The amplitude modulation of light is achieved by using a light shielding member or members having different transmittances. The phase modulation of light is achieved by control of an uneven structure in the mask surface, control of refractive index distribution of the mask, or control of an effective refractive index obtained by density control of a plurality of refractive index members in a size order equal to or less than a wavelength, and the like. Here, an example of the amplitude modulation will be described.

In a case where a subject T is imaged, the optical modulation unit 11 applies modulation by a known two-dimensional phase amplitude pattern to light L entering from the direction of the subject, and guides the light to the pixel unit 12 in a subsequent stage with a certain distance away from the optical modulation unit 11. As a result, light intensity distribution corresponding to the shape of the subject T and the shape of the two-dimensional pattern of the optical modulation unit 11 is projected on a light receiving surface of the pixel unit 12.

In the pixel unit 12, a plurality of light receiving elements PD is arranged on a two-dimensional matrix on the light receiving surface. The pixel unit 12 photoelectrically converts the light L received by the light receiving elements PD to generate an encoded image DA in which an image of the subject T is encoded by the two-dimensional pattern of the optical modulation unit 11, and outputs the encoded image DA to the signal processing device 20. Since the encoded image DA is an image obtained by photoelectrically converting the light L entering through the optical modulation unit 11, the encoded image DA is an image in which the subject T is unrecognizable to the naked eye.

The imaging principle of the encoded image DA by the pixel unit 12 is expressed by the following Equation (1).

$$Y = F \times X + N \tag{1}$$

where:

Y: received light signal (one-dimensional data) of each light receiving element PD
X: scene vector (value of light L incident on the optical modulation unit 11 at the time of imaging (one-dimensional data))
N: noise
F: imaging matrix (matrix defined by the two-dimensional pattern of the optical modulation unit 11 and distance between the mask and an imaging element)

As can be seen from Equation (1), the received light signal Y of each light receiving element PD is a signal obtained by adding the noise N to light obtained by modulating the scene vector X at the time of imaging by the imaging matrix F.

The signal processing device 20 performs predetermined decoding processing on the encoded image DA to generate a two-dimensional image (hereinafter, referred to as "decoded image DB") in which the subject T is recognizable similarly to the case of a general camera. For example, the signal processing device 20 generates the decoded image DB by multiplying the received light signal Y of each light receiving element PD described above by an inverse matrix $F^{-1}$ of the imaging matrix F to restore the scene vector X, and outputs the decoded image DB.

As described above, the encoded image DA captured by the lensless sensor 1 is an image in which the subject T is unrecognizable to the naked eye, and the image information itself on the encoded image DA is different from that on an image captured by a normal camera that receives light from a subject entering through the lens to capture an image thereof.

In addition, the decoded image DB captured by the lensless sensor 1 is a two-dimensional image in which the subject T is recognizable, but is an image generated from the encoded image DA, and thus, strictly speaking, the image information itself on the decoded image DB is different from that on an image captured by the normal camera.

Examples of a specific difference of the image information include an erroneous signal to be expressed in the decoded image DB when the decoding processing acts on the noise N included in the received light signal Y, and a blur of the subject image due to the influence of regularization or the like incorporated in the decoding processing.

For this reason, there is a possibility that, in general image recognition artificial intelligence (AI), information desired by a user such as a position, contour, type, attributes such as gender and age, subject ID, or reliability scores thereof cannot be extracted from image information on the encoded image DA or the decoded image DB acquired by the lensless sensor 1.

In view of this, the information processing system according to the embodiment has a configuration in which the desired information can be acquired from image information obtained by the lensless sensor 1.

[2. Configuration of Information Processing System According to Embodiment]

Fig. 2 is a functional block diagram illustrating an example of the configuration of an information processing system 100 according to the embodiment. As illustrated in Fig. 2, the information processing system 100 includes the optical modulation unit 11, the pixel unit 12, and an information extraction unit 30.

The optical modulation unit 11 and the pixel unit 12 are the same as the optical modulation unit 11 and the pixel unit 12 of the general lensless sensor 1 illustrated in Fig. 1. The optical modulation unit 11 applies modulation by a known two-dimensional phase amplitude pattern to light L entering from the direction of the subject, and guides the light to the pixel unit 12 in a subsequent stage with a certain distance away from the optical modulation unit 11.

The pixel unit 12 photoelectrically converts the light L entering through the optical modulation unit 11, generates an encoded image DA in which an image of the subject T is encoded by the two-dimensional pattern of the optical modulation unit 11, and outputs the encoded image DA to the information extraction unit 30.

Note that the pixel unit 12 is not limited to a pixel of an image sensor with a general RGB color filter. The pixel unit 12 may be a pixel of a monochrome sensor in which color information separation using a color filter is not performed or an image sensor in which color information other than RGB is acquired. Alternatively, the pixel unit 12 may be a pixel of a multispectral image sensor in which color information on two to four or more colors is acquired.

Further, the target wavelength region of the pixel unit 12 is not limited to the visible light region and the pixel unit 12 may have a pixel structure in which a wavelength region other than the visible light region, e. g., ultraviolet (UV) and infrared (IR) rays, is targeted. Further, the pixel unit 12 may be a pixel of an image sensor having a single photon avalanche diode (SPAD) structure. Further, the pixel unit 12 may be an event-based vision sensor capable of detecting a luminance change for each pixel.

The information extraction unit 30 includes a microcomputer having a central processing unit (CPU), a read only memory (ROM), a random access memory (RAM), and the like, and various circuits.

The information extraction unit 30 includes AI that functions when the CPU executes a program stored in the ROM using the RAM as a work area. Such AI is information extraction AI that is dedicated to a lensless sensor, and subjected to machine learning so as to extract predetermined information from image information on the encoded image DA acquired by the lensless sensor.

A part or the whole of the information extraction unit 30 may be configured by hardware such as an application specific integrated circuit (ASIC) or a field programmable gate array (FPGA).

The information extraction AI includes, for example, a neural network such as a deep neural network (DNN), a convolutional neural network (CNN), or a vision transformer. The information extraction AI sequentially receives inputs of encoded images DA (questions) for which predetermined information to be extracted (answers) is known.

Then, the information extraction AI extracts the predetermined information from the encoded image DA, updates a coefficient of the neural network so as to improve a match rate (accuracy rate) between the extracted information and the answer information, and learns through machine learning. A specific example of how to generate an image data set serving as a teaching material for the machine learning will be described later.

The information extraction unit 30 extracts, from the encoded image DA of the subject T input from the pixel unit 12, information desired by a user (hereinafter, referred to as "desired information") including the position, contour, type, attributes such as gender and age, and subject ID of the subject T in the image, or reliability scores thereof, for example.

Here, an example of the configuration of the information extraction unit 30 will be described. Fig. 3 is a block diagram illustrating an example of the configuration of the information extraction unit 30 according to an embodiment. As illustrated in Fig. 3, the information extraction unit 30 includes a subject detection unit 301, a subject type extraction unit 302, and a subject feature value extraction unit 303.

Further, the information extraction unit 30 includes a subject detection unit 304, a subject type extraction unit 305, and a subject feature value extraction unit 306. The information extraction unit 30 also includes a subject identity determination unit 307 and a subject ID assignment unit 308.

The subject detection unit 301 receives an input of an encoded image DA of the n-th (n is a natural number) frame. On the other hand, the subject detection unit 304 receives an input of an encoded image DA of the (n + 1)-th frame. The encoded image DA of the n-th frame and the encoded image DA of the (n + 1)-th frame are encoded images DA captured continuously in a time series.

The subject detection units 301 and 304 are processing units each detecting the position and contour of the subject T from the encoded image DA thus received. The subject detection unit 301 outputs information indicating the position and contour of the subject T detected from the encoded image DA, and the encoded image DA to the subject type extraction unit 302, the subject feature value extraction unit 303, and the subject identity determination unit 307 in a subsequent stage.

Further, the subject detection unit 304 outputs information indicating the position and contour of the subject T detected from the encoded image DA, and the encoded image DA to the subject type extraction unit 305, the subject feature value extraction unit 306, and the subject identity determination unit 307 in a subsequent stage.

The subject type extraction units 302 and 305 are processing units each extracting attributes of the subject T such as the type, gender, and age of the subject T from the received encoded image DA. The subject type extraction units 302 and 305 each output, as the desired information, information indicating the attributes of the subject T extracted. Note that, for each piece of information to be extracted such as the type, gender, and age of the subject T extracted, a plurality of subject type extraction units 302 and a plurality of subject type extraction units 305 may be provided.

The subject feature value extraction units 303 and 306 are processing units each extracting a feature value (numerical vector representing features) of the subject T from the input encoded image DA, and the position and contour of the subject T in the encoded image DA, and then outputting the feature value to the subject identity determination unit 307.

The subject identity determination unit 307 determines whether the subjects T whose positions and contours are detected are the same subject T as each other based on the encoded images DA input from the subject detection units 301 and 304, the positions and contours of the subjects T in the encoded images DA, and the feature values input from the subject feature value extraction units 303 and 306.

That is, the subject identity determination unit 307 is a processing unit that determines whether the subject T detected from the encoded image DA of the n-th frame is the same as the subject T detected from the encoded image DA of the (n + 1)-th frame. The subject identity determination unit 307 outputs the identity determination result to the subject ID assignment unit 308.

The subject ID assignment unit 308 gives a unique ID to each of the subject T in the encoded image DA of the n-th frame and the subject T in the encoded image DA of the (n + 1)-th frame that are determined to be the identical subject T by the subject identity determination unit 307, and then outputs the IDs as the desired information.

As described above, since the information processing system 100 includes the information extraction AI subjected to machine learning exclusively for image information captured by the lensless sensor, it is possible to extract accurate desired information from the image information acquired by the lensless sensor.

Further, since the information extraction unit 30 extracts the desired information from metadata for the encoded image DA before image reconstruction, the decoded image DB in which the subject is recognizable to the naked eye does not leak out. Therefore, according to the information processing system 100, privacy can be protected.

The information extraction unit 30 may be configured as illustrated in Figs. 4 and 5. Figs. 4 and 5 are block diagrams each illustrating another example of the configuration of the information extraction unit 30 according to an embodiment. For example, as illustrated in Fig. 4, in the information extraction unit 30, image reconstruction units 311 and 312 may be provided in a preceding stage of the subject detection units 301 and 304, respectively.

The image reconstruction unit 311 receives an input of the encoded image DA of the n-th frame. The image reconstruction unit 312 receives an input of the encoded image DA of the (n + 1)-th frame. The image reconstruction units 311 and 312 each reconstruct a decoded image DB from the received encoded image DA, and output the decoded image DB thus reconstructed to the subject detection units 301 and 304 in a subsequent stage, respectively. Since the subsequent processing is similar to the processing executed by the information extraction unit 30 illustrated in Fig. 3, the description of the overlapping portion is omitted here.

Further, as illustrated in Fig. 5, in the information extraction unit 30, an image output determination unit 321 and an image reconstruction unit 322 are provided in a subsequent stage of the subject type extraction unit 302, and an image output determination unit 323 and an image reconstruction unit 324 are provided in a subsequent stage of the subject type extraction unit 305. The remaining configuration is similar to that of the information extraction unit 30 illustrated in Fig. 3.

Accordingly, the image output determination units 321 and 323 and the image reconstruction units 322 and 324 will be described herein, and the description of the overlapping portion of the other configurations is omitted.

The image output determination units 321 and 323 determine whether there is an attribute that a system operator desires to designate as a monitoring target among the attributes such as the type, gender, and age of the subject T extracted by the subject type extraction units 302 and 305 in the preceding stage.

When determining that there is an attribute that the system operator desires, the image output determination units 321 and 323 output the encoded image DA in which the attribute is extracted to the image reconstruction units 322 and 324 in the subsequent stage, respectively. Further, the image output determination units 321 and 323 output, among the encoded images DA, an encoded image DA corresponding to a part containing the subject T of the attribute desired by the system operator to the image reconstruction units 322 and 324 in the subsequent stage, respectively.

The image reconstruction units 322 and 324 each reconstruct the decoded image DB from the received encoded image DA and output the resultant. This reduces processing load, applied to the image reconstruction units 322 and 324, for reconstructing the decoded image DB from the encoded image DA.

Fig. 6 is a flowchart illustrating an example of processing executed by the information extraction unit 30 illustrated in Fig. 5. As illustrated in Fig. 6, the information extraction unit 30 first detects a subject T from the encoded image DA (Step S1). The information extraction unit 30 then determines a type of the subject T to extract the same (Step S2).

Thereafter, the information extraction unit 30 determines whether the type of the subject T corresponds to a target for image output, i.e., is a type desired by the system operator (Step S3). If the information extraction unit 30 determines that the type of the subject T does not correspond to the target for image output (Step S3, No), then the processing proceeds to Step S4.

If the information extraction unit 30 determines that the type of the subject T corresponds to the target for image output (Step S3, Yes), then the decoded image DB is reconstructed from the encoded image DA (Step S5). Then, the information extraction unit 30 crops a subject region containing the subject T from the reconstructed image, i.e., the decoded image DB reconstructed (Step S6), and the processing proceeds to Step S4.

In Step S4, the information extraction unit 30 outputs the extracted information on the subject T (desired information), and the processing ends. Each time the encoded image DA is input from the pixel unit 12, the information extraction unit 30 executes the processing illustrated in Fig. 6.

Note that the optical modulation unit 11, the pixel unit 12, and the information extraction unit 30 included in the information processing system 100 may be mounted on one piece of hardware, or may be distributed and mounted on a plurality of pieces of hardware capable of communicating information therebetween. Next, an example of the hardware configuration of the information processing system 100 will be described.

[3. Example of Hardware Configuration of Information Processing System]

Figs. 7 to 11 are diagrams each illustrating an example of the hardware configuration of the information processing system according to the embodiment. As illustrated in Fig. 7, the information processing system 100 may be mounted on a lensless sensor 101.

Specifically, the lensless sensor 101 according to the embodiment includes the optical modulation unit 11, the pixel unit 12, and the information extraction unit 30. According to such a configuration, the lensless sensor 101 can extract only accurate desired information from image information on the encoded image DA without outputting the decoded image DB to the outside.

Alternatively, the lensless sensor 101 may have a form in which only the processing related to the information extraction unit 30 is mounted and processing related to image output as in a general image sensor is not mounted. In this case, the lensless sensor 101 has a feature that it does not have an image output function and outputting only desired metadata is guaranteed as hardware, which is preferable from the viewpoint of privacy protection.

Alternatively, as illustrated in Fig. 8, the information processing system 100 according to the embodiment may include a lensless sensor 102 and an information processing device 103. In this case, for example, the lensless sensor 102 includes the optical modulation unit 11 and the pixel unit 12.

On the other hand, the information processing device 103 includes the information extraction unit 30. According to such a configuration, image information on the encoded image DA is acquired from the existing lensless sensor 102, which enables extraction of accurate desired information from the image information.

Alternatively, as illustrated in Fig. 9, the information processing system 100 may include the lensless sensor 102, a data transfer unit 40, and a cloud 104. In this case, for example, the lensless sensor 102 includes the optical modulation unit 11 and the pixel unit 12.

Further, the information extraction unit 30 is provided on the cloud 104. The data transfer unit 40 is, for example, a communication device capable of communicating wired or wirelessly information with the information extraction unit 30 on the cloud 104 via a communication network such as the Internet.

Wireless communication includes third-generation mobile communication systems (3G), fourth-generation mobile communication systems (4G), long term evolution (LTE), fifth-generation mobile communication systems (5G), other mobile communication standards, wireless local area networks (LANs) such as Wi-Fi (registered trademark), Bluetooth (registered trademark), ZigBee (registered trademark), Z-Wave (registered trademark), ultra wide band (UWB), Thread (registered trademark), WiGig (registered trademark), near field communication (NFC), and other short-range wireless communications. Wired communication includes wireless LANs such as Ethernet (registered trademark) and other wired communication systems.

The data transfer unit 40 transfers the image information on the encoded image DA output from the lensless sensor 102 to the information extraction unit 30 on the cloud 104. The information extraction unit 30 acquires the image information on the encoded image DA transferred from the data transfer unit 40, which enables extraction of accurate desired information from the image information.

According to such a configuration, the information extraction unit 30 provided on the cloud 104 can be shared by a plurality of users. This increases the versatility of the information processing system 100.

Alternatively, as illustrated in Fig. 10, the information processing system 100 may include a lensless sensor 105 having some functions of the information extraction unit 30 and an information processing device 106 having the remaining functions other than some functions of the information extraction unit 30 included in the lensless sensor 105. In this case, the lensless sensor 105 includes the optical modulation unit 11, the pixel unit 12, and a first information extraction unit 31. On the other hand, the information processing device 106 includes a second information extraction unit 32.

The first information extraction unit 31 extracts desired information to be extracted in a previous stage from among desired information to be extracted in a plurality of stages, and outputs the extracted desired information to the second information extraction unit 32 of the information processing device 106.

The second information extraction unit 32 extracts desired information to be extracted in a subsequent stage from among the desired information to be extracted in the plurality of stages.

For example, in a case where the information extraction unit 30 extracts desired information from image information by a deep neural network (DNN) of five layers, the first information extraction unit 31 executes information extraction processing from the first layer serving as an input layer to the second layer serving as an intermediate layer. On the other hand, the second information extraction unit 32 executes information extraction processing from the third layer serving as the intermediate layer to the fifth layer serving as an output layer.

According to such a configuration, the information processing system 100 can distribute a part of the functions of the information extraction unit 30 and the remaining functions thereof to the lensless sensor 105 and the information processing device 106. Therefore, according to the information processing system 100, the processing load on each device can be reduced as compared with a case where the functions of the information extraction unit 30 are incorporated in any one of the lensless sensor 105 and the information processing device 106.

Note that, although the case where the information extraction unit 30 extracts the desired information from the encoded image DA generated by the lensless sensor has been described here, this is an example. The information extraction unit 30 may be configured to extract the desired information from the decoded image DB generated by the lensless sensor.

In this case, as illustrated in Fig. 11, an information processing system 110 includes the optical modulation unit 11, the pixel unit 12, an image reconstruction unit 13, and an information extraction unit 33. The optical modulation unit 11 and the pixel unit 12 illustrated in Fig. 11 are the same as the optical modulation unit 11 and the pixel unit 12 illustrated in Fig. 11.

Further, the image reconstruction unit 13 illustrated in Fig. 11 is the same as the signal processing device 20 illustrated in Fig. 1. That is, the image reconstruction unit 13 is a processing unit that generates a decoded image DB from an encoded image DA input from the pixel unit. The image reconstruction unit 13 outputs the generated decoded image DB to the information extraction unit 33.

Here, in the information extraction unit 33, an image data set used as the teaching material for machine learning is different from the image data set used as the teaching material for machine learning by the information extraction unit 30 illustrated in Figs. 2 to 9. The information extraction AI of the information extraction unit 33 sequentially receives inputs of decoded images DB (questions) for which predetermined information to be extracted (answers) is known.

Then, the information extraction AI extracts the predetermined information from the decoded image DB, updates a coefficient of the neural network so as to improve a match rate (accuracy rate) between the extracted information and the answer information, and learns through machine learning. The information extraction unit 33 then extracts the desired information from the decoded image DB input from the image reconstruction unit 13.

As described above, since the information extraction unit 33 includes the information extraction AI subjected to machine learning so as to extract the predetermined information from the decoded image DB generated by the lensless sensor, it is possible to extract accurate desired information from the decoded image DB.

Note that, in the embodiment involving the image reconstruction processing, reconstruction processing designed not to include specific information in the reconstructed image may be applied. For example, in a case where information extraction for object detection is performed, human face information is unnecessary, and it is preferable that the human face information is not included in the reconstructed image in terms of privacy protection.

For this reason, the image reconstruction unit 13 may perform the reconstruction processing designed to reconstruct only information other than the face information. Alternatively, in addition to the processing of calculating the decoded image in which the subject is recognizable, masking processing such as blackening may be additionally performed such that the face information in the image cannot be identified, and then a decoded image in which the human face information may be excluded.

Further, excluding unnecessary information may be performed not by the image reconstruction unit 13 but by the optical modulation unit 11 or a combination of the optical modulation unit 11 and the image reconstruction unit 13. For example, a form may be used in which the optical modulation unit 11 does not acquire information on spatial frequency from which the face information can be resolved and the image reconstruction unit 13 generates, from the encoded image DA, for example, silhouette information of a person that does not include the face information.

[4. Training Data Generation Device]

The image data set used for machine learning in the information extraction AI can be generated by assigning, by an operator, a label indicating predetermined information to be extracted to a large number of encoded images actually generated by the lensless sensor. However, in such a procedure for generating an image data set, the burden on the operator increases.

In view of this, in the present embodiment, the training data generation device generates image data. Fig. 12 is a functional block diagram illustrating an example of the configuration of the training data generation device according to the embodiment. Fig. 13 is a flowchart illustrating an example of processing executed by an image data generation device according to the embodiment.

As illustrated in Fig. 12, a training data generation device 200 includes a microcomputer having a CPU, a ROM, a RAM, and the like, and various circuits. The training data generation device 200 includes a subject image generation unit 201, an optical element optical characteristic calculation unit 202, and a pixel output calculation unit 203 that function when the CPU executes a program stored in the ROM using the RAM as a work area.

A part or the whole of the subject image generation unit 201, the optical element optical characteristic calculation unit 202, and the pixel output calculation unit 203 included in the training data generation device 200 may be configured by hardware such as an ASIC or an FPGA.

The image information on the encoded image generated by the lensless sensor changes due to, for example, disturbances and errors such as an environment in which the subject is imaged, an assembly error of an optical modulation element (mask), and a difference in optical characteristics of each mask.

The information extraction AI thus needs machine learning to enhance robustness to the disturbances and errors. In light of the above, the training data generation device 200 generates, by means of simulation, an image data set serving as a teaching material necessary to enhance the robustness to the disturbances and errors.

The training data generation device 200 simulates an image captured by the lensless sensor by adding an influence of a simulation of an imaging process via the optical modulation element to an image captured by a normal sensor that is not the lensless sensor.

The training data generation device 200 generates a plurality of images captured by the lensless sensor by means of simulation. Further, in the simulation process, the training data generation device 200 may arbitrarily add an influence of an error and a disturbance that can occur in the actual lensless sensor, and uses the lensless simulation image data set generated in this way as a teaching material for the information extraction AI, which enables AI learning robust to the disturbances and the errors.

The training data generation device 200 is configured to perform a different behavior for each generation of the lensless simulation image for a phenomenon in which the behavior varies for each device or each imaging trial, such as noise and a manufacturing error of the lensless sensor. This allows the training data generation device 200 to achieve learning robust to the phenomenon by adding the variation distribution to the lensless simulation image data set.

The subject image generation unit 201 receives an input of a reference image data set such as a subject image and an image captured by a normal camera. Further, the subject image generation unit 201 may be configured to generate a subject image on a full simulation basis using computer graphics (CG) or the like. Further, the subject image generation unit 201 may be configured to generate a subject image imitating a temporal behavior in order to reproduce a phenomenon associated with temporal variation, such as flicker or a subject moving during the exposure period of the image sensor. The subject image generation unit 201 outputs, to the pixel output calculation unit 203, the input subject image or the generated subject image.

The optical element optical characteristic calculation unit 202 is a functional block imitating an optical characteristic of how the optical element spreads a point image of a subject scene on the image plane. The optical element optical characteristic calculation unit 202 calculates parameters for image processing in consideration of an optical characteristic difference for each optical modulation element, such as an assembly error of the optical element to the image sensor, a variation in manufacturing shape, a deflection of the optical modulation element, and stray light entering from outside the angle of view.

Alternatively, the optical element optical characteristic calculation unit 202 may be configured to calculate parameters for image processing in consideration of an influence on optical characteristics due to a defect in the optical modulation element or dust. The optical element optical characteristic calculation unit 202 outputs the calculated parameters to the pixel output calculation unit 203 to set the same therein.

The pixel output calculation unit 203 is a functional block that performs image processing to which parameters set by the optical element optical characteristic calculation unit 202 are applied on the image information on the subject input from the subject image generation unit 201 and simulates what kind of image the lensless sensor outputs.

The pixel output calculation unit 203 may be configured to take into account variations such as observation noise of the image sensor (pixel unit 12) and characteristic differences for each image sensor (pixel unit 12). The pixel output calculation unit 203 may be configured to take into account the influence of a pixel oblique incidence characteristic on the imaging result. The pixel output calculation unit 203 may be configured to take into account the influence of a pixel defect of the image sensor (pixel unit 12) or the like.

In this way, the pixel output calculation unit 203 generates a plurality of lensless simulation images imitating encoded images output from the lensless sensor in consideration of various disturbances and errors, and creates a lensless simulation image data set. At this time, the pixel output calculation unit 203 may create the lensless simulation image data set by assigning a label indicating information to be extracted (correct answer of extraction result) to the lensless simulation image created.

As described above, the training data generation device 200 creates an image data set of the encoded image DA reproduced by simulating an image process by the lensless sensor by adding an influence of a simulation of an imaging process via the optical modulation element to an image captured by a normal sensor. Further, by arbitrarily adding an influence of an error and a disturbance, an image data set for implementing AI learning robust to the disturbance and the error may be created.

Therefore, the information extraction AI can learn through machine learning with enhanced robustness to the disturbances and the errors by repeatedly learning through machine learning information extraction processing of extracting desired information from an image of an image data set created by the training data generation device 200.

In a case where the lensless simulation image data set used for machine learning for the image reconstruction unit 13 and the information extraction unit 33 illustrated in Fig. 11 is created, the training data generation device 200 generates the decoded image DB from the generated encoded image DA and creates the lensless simulation image data set.

In response to the reference image data set input, the training data generation device 200 executes the processing illustrated in Fig. 13. In a case where no reference image data set is input, the training data generation device 200 can also generate the reference image data set by itself using computer graphics (CG) or the like, for example, and execute the processing illustrated in Fig. 13.

As illustrated in Fig. 13, in response to the reference image data set input, the training data generation device 200 determines whether an unreferenced image remains in the reference image data set (Step S101). If determining that an unreferenced image remains (Step S101, Yes), then the training data generation device 200 acquires one unreferenced image from the reference image data set (Step S102).

Subsequently, the training data generation device 200 inputs the acquired image to the subject image generation unit 201 (Step S103). Note that the subject image generation unit 201 outputs the input image to the pixel output calculation unit 203.

Thereafter, the training data generation device 200 calculates optical element optical characteristics to set the optical element optical characteristics in the pixel output calculation unit 203 (Step S104). Subsequently, the pixel output calculation unit 203 generates a lensless simulation image (Step S105).

Thereafter, the pixel output calculation unit 203 stores the generated image in the lensless simulation image data set (Step S106), and the processing proceeds to Step S101. If determining that no unreferenced image remains in the reference image data set (Step S101, No), then the training data generation device 200 ends the processing.

Note that the training data generation device 200 illustrated in Fig. 12 is an example. The data set for learning used for machine learning for the information extraction AI may be created by the training data generation devices 200 and 300 illustrated in Figs. 14, 15, 19, and 21, for example. Figs. 14, 15, 19, and 21 are functional block diagrams each illustrating another example of the configuration of the training data generation device according to an embodiment.

The training data generation device 200 illustrated in Fig. 14 is different from the training data generation device 200 illustrated in Fig. 12 in that the optical element optical characteristic calculation unit 202 outputs the calculated parameters to a meta information conversion unit 204 in addition to the pixel output calculation unit 203. The other configuration is similar to that of the training data generation device 200 illustrated in Fig. 12.

The meta information conversion unit 204 illustrated in Fig. 14 converts, based on the parameters input from the optical element optical characteristic calculation unit 202, a subject position in a reference image into a subject position in the encoded image DA, and adds meta information indicating the conversion result to the lensless simulation image data set. Thereby, the meta information indicating the subject position in the encoded image DA is added to the lensless simulation image. Note that the meta information herein may include all pieces of the desired information described above.

The training data generation device 200 illustrated in Fig. 15 includes an image reconstruction unit 501, a meta information assignment unit 502, and a meta information conversion unit 503. The image reconstruction unit 501 generates a reconstructed image (decoded image DB) from the encoded image DA of an encoded image data set and outputs the reconstructed image to the meta information assignment unit 502.

Note that the image reconstruction unit 501 may output the reconstructed image thus generated to the lensless simulation image data set. The meta information assignment unit 502 gives the meta information indicating the subject position in the reconstructed image to the reconstructed image. The meta information herein may include all pieces of the desired information described above.

The meta information conversion unit 503 converts the meta information indicating the subject position in the reconstructed image into meta information indicating the subject position in the encoded image DA, and adds the resultant to the lensless simulation image data set.

Fig. 16 is a flowchart illustrating an example of processing executed by the meta information conversion units 204 and 503 according to an embodiment.

As illustrated in Fig. 16, the meta information conversion units 204 and 503 determine an effective region for optical element optical characteristics (Step S201). Subsequently, the meta information conversion units 204 and 503 calculate the center position, width, and height of the effective region for optical element optical characteristics (Step S202).

Thereafter, the meta information conversion units 204 and 503 calculate the center position of the effective region for optical element optical characteristics and a shift amount of the image center (Step S203). The meta information conversion units 204 and 503 then determine whether a subject position of an unprocessed subject T exists (Step S204).

If determining that a subject position of an unprocessed subject T exists (Step S204, Yes), then the meta information conversion units 204 and 503 use the center position, width, and height of the effective region to convert the subject position (Step S205), and the processing returns to Step S204.

Here, an example of the method for converting meta information performed by the meta information conversion units 204 and 503 will be described with reference to Figs. 17 and 18. Figs. 17 and 18 are diagrams for explanation of an example of a method for converting the meta information according to an embodiment.

For example, as illustrated in Fig. 17, in a case where the input image is a reference image DC of the reference image data set, the meta information conversion units 204 and 503 use a position MD2 of the effective region for optical element optical characteristics to convert a position MD1 of a subject T in the reference image DC into a position MD3 of a subject T in the encoded image DA.

As illustrated in Fig. 18, in a case where the input image is an encoded image DA of the encoded image data set, the meta information conversion units 204 and 503 use the position MD2 of the effective region for optical element optical characteristics to convert the position MD3 of the subject T in the encoded image DA into the position MD1 of the subject T in the reconstructed image DC.

At this time, the meta information conversion units 204 and 503 convert the position of the subject T based on the following formulas (1), (2), (3), and (4):

Lateral direction coordinate 1 of the subject position after conversion = lateral direction coordinate 1 of the subject position - (width of the effective region for optical element optical characteristics/2) - lateral direction shift amount of the center position of the effective region for optical element optical characteristics   (1);

Lateral direction coordinate 2 of the subject position after conversion = lateral direction coordinate 2 of the subject position + (width of the effective region for optical element optical characteristics/2) - lateral direction shift amount of the center position of the effective region for optical element optical characteristics   (2);

Vertical direction coordinate 1 of the subject position after conversion = vertical direction coordinate 1 of the subject position - (height of the effective region for optical element optical characteristics/2) - vertical direction shift amount of the center position of the effective region for optical element optical characteristics   (3);

and

Vertical direction coordinate 2 of the subject position after conversion = vertical direction coordinate 2 of the subject position + (height of the effective region for optical element optical characteristics/2) - vertical direction shift amount of the center position of the effective region for optical element optical characteristics   (4).

Referring back to Fig. 16, the meta information conversion units 204 and 503 perform the conversion processing of Step S205, and the processing returns to Step S204. Then, if the meta information conversion units 204 and 503 determine that there is no subject position of an unprocessed subject T (Step S204, No), then the processing ends.

Further, the training data generation device 300 illustrated in Fig. 19 includes a lensless camera 301, a normal camera 302, a general-purpose recognition device 303, and a pairing processing unit 304. The lensless camera 301 is the same as the imaging device 10 illustrated in Fig. 1, and one having a lensless image sensor can be used as the lensless camera 301.

In a case where creating a data set for learning, the training data generation device 300 captures an image of the identical subject T with the lensless camera 301 and the normal camera 302. The lensless camera 301 captures an encoded image DA used as a question to make the information extraction AI extract desired information, and outputs the encoded image DA to the pairing processing unit 304.

The training data generation device 300 can acquire more accurate answer information for the lensless camera 301 by making the optical axes of the lensless camera 301 and the normal camera 302 coincide substantially or perfectly. For example, a beam splitter such as a prism or a half mirror can be used to make the optical axes of the lensless camera 301 and the normal camera 302 coincide.

The normal camera 302 captures an RGB (three primary colors) image of the subject to output the image to the general-purpose recognition device 303. The general-purpose recognition device 303 recognizes, from the RGB image, desired information used as an answer to the question to make the information extraction AI extract the desired information. Then, the general-purpose recognition device 303 outputs the recognition result (answer) of the desired information to the pairing processing unit 304.

The pairing processing unit 304 creates a data set for learning by pairing the encoded image DA input from the lensless camera 301 with the recognition result input from the general-purpose recognition device 303.

In a case where the data set for learning used for machine learning for the image reconstruction unit 13 and the information extraction unit 33 illustrated in Fig. 11 is created, the training data generation device 300 generates the decoded image DB from the generated encoded image DA, makes a pair with the recognition result, and creates the data set for learning.

Fig. 20 is a flowchart illustrating an example of processing executed by the pairing processing unit 304 illustrated in Fig. 19. As illustrated in Fig. 20, when starting pairing processing, the pairing processing unit 304 first acquires an image of the normal camera 302 (Step S301), and determines a part corresponding to the angle of view of the normal camera 302 from an image of the lensless camera 301 (Step S302).

Thereafter, the pairing processing unit 304 crops the part corresponding to the angle of view of the normal camera 302 from the image of the lensless camera 301 (Step S303), and resizes the cropped region in the lensless camera 301 to the image size for the normal camera 302 (Step S304).

Further, when starting pairing processing, the pairing processing unit 304 converts a subject position indicated in the recognition result by the normal camera 302 to a subject position corresponding to the lensless camera 301 (Step S305). Subsequently, the pairing processing unit 304 correlates the correspondence relationship with a subject type to the subject position converted to correspond to the lensless camera 301 (Step S306).

Thereafter, the pairing processing unit 304 pairs the encoded image DA of the lensless camera 301 with the recognition result by the normal camera 302 (Step S307) and ends the pairing processing.

Alternatively, the training data generation device 300 may be configured as illustrated in Fig. 21. The training data generation device 300 illustrated in Fig. 21 is configured not to have the general-purpose recognition device 303 illustrated in Fig. 19, which differs from the training data generation device 300 illustrated in Fig. 19.

As for the training data generation device 300 illustrated in Fig. 21, the pairing processing unit 304 receives an input of a lensless encoded image (question) from the lensless camera 301, and an input of an RGB image (answer) from the normal camera 302. In this case, the pairing processing unit 304 creates a data set for learning by pairing the lensless encoded image (question) with the RGB image (answer).

Fig. 22 is a flowchart illustrating an example of processing executed by the pairing processing unit 304 illustrated in Fig. 21. As illustrated in Fig. 22, when starting pairing processing, the pairing processing unit 304 performs the same processing as that of Steps S301 to S304 illustrated in Fig. 20.

Specifically, the pairing processing unit 304 first acquires an image of the normal camera 302 (Step S301), and determines a part corresponding to the angle of view of the normal camera 302 from an image of the lensless camera 301 (Step S302).

Thereafter, the pairing processing unit 304 crops the part corresponding to the angle of view of the normal camera 302 from the image of the lensless camera 301 (Step S303), and resizes the cropped region in the lensless camera 301 to the image size for the normal camera 302 (Step S304).

Thereafter, the pairing processing unit 304 pairs the encoded image DA of the lensless camera 301 with the image of the normal camera 302 (Step S308) and ends the pairing processing.

[5. Learning Device]

The information extraction AI according to the embodiment can function as a learning device used for designing the lensless sensor 1 illustrated in Fig. 1, for example, by configuring the information extraction AI so as to also have the functions of the training data generation devices 200 and 300 described with reference to Figs. 12 to 22.

Fig. 23 is a diagram for explanation of the learning device according to the embodiment. As illustrated in Fig. 23, a learning device 400 according to the embodiment includes a microcomputer having a CPU, a ROM, a RAM, and the like, and various circuits.

The learning device 400 includes a setting unit 410 that functions when the CPU executes a program stored in the ROM using the RAM as a work area, an encoded image generation unit 403, and information extraction AI 404. The setting unit 410 includes an optical element optical characteristic setting unit 401 and an image sensor setting unit 402.

A part or the whole of the optical element optical characteristic setting unit 401, the image sensor setting unit 402, the encoded image generation unit 403, and the information extraction AI 404 of the learning device 400 may be configured by hardware such as an ASIC or an FPGA.

As with the optical element optical characteristic calculation unit 202 illustrated in Fig. 12, the optical element optical characteristic setting unit 401 calculates, for each input image, parameters for image processing in consideration of an optical characteristic difference for each optical modulation element, such as an assembly error of the optical element to the image sensor, a variation in manufacturing shape, a deflection of the optical modulation element, and stray light entering from outside the angle of view, and sets the parameters in the encoded image generation unit 403. Further, the optical element optical characteristic setting unit 401 may also set the two-dimensional pattern of the optical modulation unit 11, the distance between the mask and the imaging element, and the like as design targets of the lensless sensor 1, calculate parameters for image processing corresponding to the design values, and set the parameters in the encoded image generation unit 403.

The image sensor setting unit 402 calculates, for each input image, parameters for image processing in consideration of a phenomenon in which the behavior varies for each device or each imaging trial, such as noise, a manufacturing error of the lensless sensor, and an error in an attachment position, and sets the parameters in the encoded image generation unit 403.

Further, the image sensor setting unit 402 may also set characteristics of the image sensor such as a pixel pitch and a device structure of the lensless sensor such as an attachment position of the optical element as design targets of the lensless sensor 1, calculate parameters for image processing corresponding to the design values, and set the parameters in the encoded image generation unit 403. Further, for example, parameters for image processing corresponding to photographing conditions of the lensless sensor such as exposure time and gain setting may be calculated and set in the encoded image generation unit 403.

As with the pixel output calculation unit 203 illustrated in Fig. 12, the encoded image generation unit 403 generates lensless simulation image data by executing image processing according to the set parameters, and outputs the lensless simulation image data to the information extraction AI 404. As with the information extraction AI of the information extraction unit 30 described with reference to Figs. 2 to 9, the information extraction AI extracts the desired information from the lensless simulation image data, that is, the encoded image DA.

Then, in the learning device 400, machine learning is performed by repeatedly executing such processing, and the parameters calculated by the optical element optical characteristic setting unit 401 are sequentially updated so that the accuracy of extracting the desired information by the information extraction AI 404 is increased. Further, in the learning device 400, the parameters calculated by the image sensor setting unit 402 are sequentially updated so that the accuracy of extracting the desired information by the information extraction AI 404 is increased.

The optical element optical characteristic setting unit 401 outputs the updated and optimized parameters as optical modulation element setting information. The image sensor setting unit 402 outputs the updated and optimized parameters as image sensor setting information.

As a result, for example, a designer of the lensless sensor 1 can design the optical modulation unit 11 such that the accuracy of extracting desired information by the information extraction AI 404 is increased by using the optical modulation element setting information. Further, the designer can use the image sensor setting information to achieve control and an attachment position of the pixel unit 12 such that the accuracy of extracting desired information by the information extraction AI 404 is increased.

Note that, the image sensor setting unit 402 may be omitted from the learning device 400. As long as the learning device 400 is provided with at least the optical element optical characteristic setting unit 401, the encoded image generation unit 403, and the information extraction AI 404, it is possible to generate optical modulation element setting information necessary for the optimum optical modulation unit 11.

Further, in the learning device 400, not only the parameters of the optical element optical characteristic setting unit 401 and the image sensor setting unit 402 but also the coefficient of the neural network of the information extraction AI 404 may be set as the update target so that the accuracy of extracting desired information by the information extraction AI 404 is increased.

Further, the learning device 400 may have a function of deploying an AI model appropriate for the lensless sensor according to the type of the optical element. Since a data format to be output is an image in a normal RGB image sensor, AI processing can be performed by connecting various AI models to the subsequent stage. On the other hand, the lensless sensor has a feature that, when the optical element is changed, the encoded image greatly changes depending on the change in optical element. Therefore, in selecting an AI model for lensless, it is necessary to consider the optical modulation effect by each optical element and select an AI model corresponding thereto.

On the other hand, in an embodiment of the learning device 400, an AI model corresponding to the type of the optical element used in the lensless sensor may be selected, and a user interface that can be deployed in the lensless sensor may be provided to the user. This enables the user of the lensless sensor to easily deploy an optimal AI model corresponding to the optical element to be used.

In a case where the type of the optical element of the lensless sensor to be used by the user is designated, the user may designate the type via the user interface. Alternatively, instruction data with which the type of the optical element to be mounted can be determined may be provided to the lensless sensor, and the learning device may deploy an appropriate AI model by reading the instruction data from the connected lensless sensor camera.

Further, in a case where the user selects, in the learning device 400, an AI model corresponding to the type of the optical element, a user interface for allowing the user to select an information type acquired from the lensless sensor from among a plurality of candidates may be presented. In a case where there is a plurality of types of information that can be extracted from the imaging result for the identical optical element, candidates for the information extraction AI corresponding to the selected optical element is presented to the user, and the user can select desired information extraction AI from among the presented information extraction AI and deploy the AI model. For example, as the information extracted from the encoded image DA for the lensless, metadata such as image recognition and a detection result, image information related to a two-dimensional image and depth information of the subject T, and the like are possible, and an AI service user can easily deploy AI which is correlated with the type of the optical element of the lensless sensor and from which information of the type desired by the user can be extracted by selecting desired AI from among the candidates.

Further, the learning device 400 may have a function of switching between the reconstructed image and the encoded image to be input to the AI model according to the type of the AI model. For example, in the case of an AI model that does not need to be aware of privacy protection like object detection, inference is made with the reconstructed image, and an AI model for a general RGB sensor can be used as it is. On the other hand, in the case of an AI model that should be aware of privacy protection like human recognition, it is preferable to make inference with the encoded image without performing the reconstruction processing. Therefore, instruction data indicating which of the encoded image and the reconstructed image is to be used for inference is also given to the AI model deployed from the AI learning service and is deployed to the lensless sensor. In the lensless sensor, the signal processing method is switched based on the instruction data, and then appropriate data is input to the AI model and inference is made.

In one embodiment of the learning device 400, a lensless sensor manufactured based on optimized design parameters may be provided to a user as a device. Alternatively, a form may be employed in which instruction data with which to determine what design parameters the lensless sensor is based on is provided to the lensless sensor, and the learning device refers to the instruction data when deploying an AI model to deploy an optimal AI model corresponding to the design parameters of the lensless sensor.

Further, in the lensless sensor, for example, arithmetic processing required in AI such as convolution may be optically simulated, and the processing may be performed in the optical modulation unit 11. Therefore, a limitation may be applied at the time of optimization of the two-dimensional pattern of the optical modulation unit such that the optical modulation unit 11 in the optical element optical characteristic setting unit 401 of the learning device 400 exhibits such an optical behavior.

Further, the lensless sensor may optically implement a more complicated feature extraction operation by stacking optical modulation elements in multiple stages. Therefore, the optical modulation unit 11 in the optical element optical characteristic setting unit 401 may assume such a behavior. The lensless sensor designed in this way optically implements the arithmetic processing required for the information extraction AI, which reduces the computational load on the information extraction unit 30.

[6. Variation of Pixel Unit: Regarding Wavelength Characteristic of Pixel Unit]

Note that the pixel unit 12 is not limited to a pixel of an image sensor with a general RGB color filter. For example, the pixel unit 12 can have a configuration in which light L entering via the optical modulation unit 11 is received by a pixel of a multispectral sensor capable of acquiring a large amount of color information. In this case, the pixel unit 12 can acquire the wavelength information on the subject with higher accuracy than the RGB sensor while taking the configuration of the lensless sensor.

On the other hand, since the encoded image DA captured by such a configuration is different in image information itself from the image captured by the image sensor having a configuration via the lens, there is a possibility that desired information cannot be extracted in a case where general image recognition AI or AI for the image sensor is applied.

In addition, color information to be acquired is different from that of the RGB sensor; therefore, image information is different from that on an image captured by the lensless sensor using the RGB sensor. Therefore, even in a case where the information extraction AI for lensless sensor using the RGB sensor is applied, there is a possibility that desired information cannot be extracted.

In view of this, the pixel unit 12 according to an embodiment of the present invention includes the information extraction AI dedicated to the configuration of the lensless sensor including the image sensor other than the RGB sensor, which enables desired information to be extracted from the image information.

Further, regarding the training data generation device, training data may be generated in consideration of characteristics of the image sensor mounted in the lensless sensor. For example, in a form of using a multispectral sensor, in the training data generation device 200, the multispectral image output from the pixel unit 12 is reproduced in consideration of the subject, the optical modulation element, and the wavelength characteristics of the image sensor, and the training data set thus generated is used as a teaching material for the information extraction AI. This makes it possible to train the information extraction AI dedicated to the lensless sensor using the multispectral image sensor. In the training data generation device 200, a disturbance or an error related to the application of the multispectral sensor may be reproduced in the image generation process.

[7. Variation of Pixel Unit: Case of Using Single Photon Avalanche Diode (SPAD) Pixel]

The pixel unit 12 may use a pixel structure of a single photon avalanche diode (SPAD). The SPAD pixel has a pixel structure utilizing an avalanche multiplication effect of multiplying electrons from one incident photon, and thus has a feature of being easy to detect even with faint light. Therefore, the use of the SPAD pixel in the lensless sensor makes it possible to efficiently detect photons even in an environment in which only a small number of photons are received such as a dark place and acquire information on the subject while taking the configuration of the lensless sensor.

On the other hand, since the imaging principle is different from that of the CMOS sensor, the encoded image DA captured by the lensless sensor equipped with the SPAD pixel is different in imaging characteristics such as a dynamic range and observation noise as compared with the case of using the CMOS sensor. Therefore, in a case where general image recognition AI is applied, there is a possibility that desired information cannot be extracted or the accuracy of extracting information is impaired.

In view of this, the pixel unit 12 according to an embodiment of the present invention includes the information extraction AI dedicated to the configuration of the lensless sensor including the SPAD pixel, so that desired information can be extracted from the image information.

Further, in the training data generation device 200, the training data set generated by simulating the imaging process by the SPAD pixel mounted on the lensless sensor is used as a teaching material for the information extraction AI. This makes it possible to train the information extraction AI dedicated to the lensless sensor using the SPAD pixel. In the training data generation device 200, a disturbance or an error related to the application of the SPAD pixel may be reproduced in the image generation process.

[8. Variation of Pixel Unit: Case of Using Event-based Vision Sensor]

The pixel unit 12 may use pixels of an event-based vision sensor. The event-based vision sensor can detect a luminance change for each pixel to output only changed data in combination with information on coordinates of the pixel and time, and has a feature of realizing high-speed and low-latency. Therefore, the use of the pixels of the event-based vision sensor in the lensless sensor makes it possible to perform imaging with a characteristic that the amount of output data can be reduced during a period when there is no fluctuation in the subject scene.

On the other hand, the event-based vision sensor differs from the CMOS image sensor in imaging principle and output image information. Therefore, in a case where general image recognition AI is applied to a lensless sensor equipped with the event-based vision sensor, there is a possibility that desired information cannot be extracted.

Further, image recognition AI for a general event-based vision sensor is predicated on an imaging form via a lens. In a case where this is applied to the lensless sensor equipped with the event-based vision sensor, there is a possibility that desired information cannot be extracted.

In view of this, the pixel unit 12 according to an embodiment of the present invention includes the information extraction AI dedicated to the configuration of the lensless sensor including pixels of the event-based vision sensor, so that desired information can be extracted from the image information.

Further, in the training data generation device 200, the training data set generated by simulating the imaging process by the pixels of the event-based vision sensor mounted on the lensless sensor is used as a teaching material for the information extraction AI. This makes it possible to train the information extraction AI dedicated to the lensless sensor using the pixels of the event-based vision sensor. In the training data generation device 200, a disturbance or an error related to the mounting of the pixels of the event-based vision sensor may be reproduced in the image generation process.

The effects described in the present specification are merely examples and are not limited, and other effects may be provided.

The present technology may also be configured as below.

(1) A non-transitory computer-readable storage medium storage computer-readable instructions thereon which, when executed by an information processing system, cause the information processing system to perform a method, the method comprising:

receiving an encoded image of a subject captured by a lensless image sensor; and
extracting by a trained machine learning model information from the encoded image.

(2) The non-transitory computer-readable storage medium according to (1), wherein the trained machine learning model is a deep neural network.
(3) The non-transitory computer-readable storage medium according to (2), further comprising:
updating a coefficient of the deep neural network.
(4) The non-transitory computer-readable storage medium according to (1), wherein the trained machine learning model is a convolutional neural network.
(5) The non-transitory computer-readable storage medium according to (1), wherein the trained machine learning model is a vision transformer.
(6) The non-transitory computer-readable storage medium according to (1), wherein the information includes one or more of a position, contour, and type of the subject in the encoded image.
(7) The non-transitory computer-readable storage medium according to (1), wherein the encoded image is photoelectrically converted light that has passed through a mask.
(8) The non-transitory computer-readable storage medium according to (1), wherein the encoded image is an image in which a subject is unrecognizable to a human.
(9) The non-transitory computer-readable storage medium according to (1), further comprising:
extracting the information without outputting a decoded image.
(10) The non-transitory computer-readable storage medium according to (1), further comprising:
acquiring a subject image, wherein the subject image is input from a reference image data set or generated.
(11) The non-transitory computer-readable storage medium according to (10), further comprising:
in a case that the subject image is generated, generating a simulated subject image to be used as the subject image using computer graphics.
(12) The non-transitory computer-readable storage medium according to (11), wherein the subject image is generated imitating a temporal behavior associated with a temporal variation.
(13) The non-transitory computer-readable storage medium according to (10), further comprising:

calculating parameters for image processing based on optical characteristics of lensless image sensors including at least one of one or more disturbances and one or more errors;
performing image processing based on applying the calculated parameters to the subject image; and
simulating, based on the image processing, an image output by the lensless sensor.

(14) The non-transitory computer-readable storage medium according to (13), further comprising:

generating a plurality of lensless simulation images imitating encoded images output from the lensless sensor based on the at least one of one or more disturbances and one or more errors; and
creating a lensless simulation image data set.

(15) The non-transitory computer-readable storage medium according to (14), further comprising:
assigning a label indicating information to be extracted to each lensless simulation image created in the lensless simulation image data set.
(16) The non-transitory computer-readable storage medium according to (13), wherein the at least one of the one or more disturbances and one or more errors includes an environment in which the subject is imaged, an assembly error of the mask, and a difference in optical characteristics in different masks.
(17) An image processing method, comprising:

receiving an encoded image of a subject captured by a lensless image sensor; and
extracting by a trained machine learning model information from the encoded image.

(18) The method of (17), further comprising:
extracting the information without outputting a decoded image.

(19) The method of (17), further comprising:
acquiring a subject image, wherein the subject image is input from a reference image data set or generated.

(20) The method of (19), further comprising:
in a case that the subject image is generated, generating a simulated subject image to be used as the subject image using computer graphics.

(21) The method of (19), further comprising:

calculating parameters for image processing based on optical characteristics of lensless image sensors including at least one of one or more disturbances and one or more errors;
performing image processing based on applying the calculated parameters to the subject image; and
simulating, based on the image processing, an image output by the lensless sensor.

(22) The method of (21), further comprising:
generating a plurality of lensless simulation images imitating encoded images output from the lensless sensor based on the at least one of one or more disturbances and one or more errors; and
creating a lensless simulation image data set.

(23) The method of (22), further comprising:
assigning a label indicating information to be extracted to each lensless simulation image created in the lensless simulation image data set.

(24) An image processing system, comprising:

information extraction circuitry configured to
receive an image of a subject captured by a lensless image sensor,
extract by a trained machine learning model information from the image, and
output the information.

(25) The image processing system of (24), wherein the received image is an encoded image.

(26) The image processing system of (24), further comprising:

image reconstruction circuitry configured to
receive an encoded image captured by the lensless image sensor,
generate a decoded image from the encoded image, and
output the decoded image to the information extraction circuitry.

(27) The image processing system of (25), further comprising:
a lensless image sensor configured to capture image data, wherein the information extraction circuitry is mounted on the lensless image sensor.

(28) The image processing system of (25), further comprising:

a lensless image sensor configured to capture image data and output an encoded image; and
an information processing device separate from the lensless image sensor, wherein the information processing device includes the information extraction circuitry.

(29) The image processing system of (25), further comprising:

a lensless image sensor configured to capture image data and output an encoded image; and
a cloud server configured to receive the encoded image, wherein the cloud server includes the information extraction circuitry.

(30) The image processing system of claim 25, wherein the information extraction circuitry includes first information extraction circuitry and second information extraction circuitry and extracts the information in a plurality of stages, the image processing system further comprising:

a lensless image sensor including the first information extraction circuitry, wherein the first information extraction circuitry is configured to
receive an encoded image captured by the lensless image sensor,
in a first stage, extract a first portion of the information, and
output the first portion of the information to the second information extraction circuitry; and

an information processing device separate from the lensless image sensor, wherein the information processing device includes the second information extraction circuitry, wherein the second information extraction circuitry is further configured to
receive the first portion of the information, and
in a second stage, extract a second portion of the information.

[Reference Signs List]

1 Lensless sensor
10 Imaging device
11 Optical modulation unit
12 Pixel unit
13 Image reconstruction unit
20 Signal processing device
30 Information extraction unit
31 First information extraction unit
32 Second information extraction unit
33 Information extraction unit
40 Data transfer unit
100 Information processing system
101 Lensless sensor
102 Lensless sensor
103 Information processing device
104 Cloud
105 Lensless sensor
106 Information processing device
110 Information processing system
200 Training data generation device
201 Subject image generation unit
202 Optical element optical characteristic calculation unit
203 Pixel output calculation unit
300 Training data generation device
301 Lensless camera
302 Normal camera
303 General-purpose recognition device
304 Pairing processing unit
400 Learning Device
401 Optical element optical characteristic setting unit
402 Image sensor setting unit
403 Encoded image generation unit
410 Setting unit
DA Encoded image
DB Decoded image

**Claims**

1. A non-transitory computer-readable storage medium storage computer-readable instructions thereon which, when executed by an information processing system, cause the information processing system to perform a method, the method comprising:

    receiving an encoded image of a subject captured by a lensless image sensor; and
    extracting by a trained machine learning model information from the encoded image.

2. The non-transitory computer-readable storage medium according to claim 1, wherein the trained machine learning model is a deep neural network.

3.   The non-transitory computer-readable storage medium according to claim 2, further comprising:
     updating a coefficient of the deep neural network.

4.   The non-transitory computer-readable storage medium according to claim 1, wherein the trained machine learning model is a convolutional neural network.

5.   The non-transitory computer-readable storage medium according to claim 1, wherein the trained machine learning model is a vision transformer.

6.   The non-transitory computer-readable storage medium according to claim 1, wherein the information includes one or more of a position, contour, and type of the subject in the encoded image.

7.   The non-transitory computer-readable storage medium according to claim 1, wherein the encoded image is photoelectrically converted light that has passed through a mask.

8.   The non-transitory computer-readable storage medium according to claim 1, wherein the encoded image is an image in which a subject is unrecognizable to a human.

9.   The non-transitory computer-readable storage medium according to claim 1, further comprising:
     extracting the information without outputting a decoded image.

10.  The non-transitory computer-readable storage medium according to claim 1, further comprising:
     acquiring a subject image, wherein the subject image is input from a reference image data set or generated.

11.  The non-transitory computer-readable storage medium according to claim 10, further comprising:
     in a case that the subject image is generated, generating a simulated subject image to be used as the subject image using computer graphics.

12.  The non-transitory computer-readable storage medium according to claim 11, wherein the subject image is generated imitating a temporal behavior associated with a temporal variation.

13.  The non-transitory computer-readable storage medium according to claim 10, further comprising:

     calculating parameters for image processing based on optical characteristics of lensless image sensors including at least one of one or more disturbances and one or more errors;
     performing image processing based on applying the calculated parameters to the subject image; and
     simulating, based on the image processing, an image output by the lensless sensor.

14.  The non-transitory computer-readable storage medium according to claim 13, further comprising:

     generating a plurality of lensless simulation images imitating encoded images output from the lensless sensor based on the at least one of one or more disturbances and one or more errors; and
     creating a lensless simulation image data set.

15.  The non-transitory computer-readable storage medium according to claim 14, further comprising:
     assigning a label indicating information to be extracted to each lensless simulation image created in the lensless simulation image data set.

16.  The non-transitory computer-readable storage medium according to claim 13, wherein the at least one of the one or more disturbances and one or more errors includes an environment in which the subject is imaged, an assembly error of the mask, and a difference in optical characteristics in different masks.

17.  An image processing method, comprising:
     receiving an encoded image of a subject captured by a lensless image sensor; and
     extracting by a trained machine learning model information from the encoded image.

18.  The method of claim 17, further comprising:
     extracting the information without outputting a decoded image.

**19.** The method of claim 17, further comprising:
acquiring a subject image, wherein the subject image is input from a reference image data set or generated.

**20.** The method of claim 19, further comprising:
in a case that the subject image is generated, generating a simulated subject image to be used as the subject image using computer graphics.

**21.** The method of claim 19, further comprising:

calculating parameters for image processing based on optical characteristics of lensless image sensors including at least one of one or more disturbances and one or more errors;
performing image processing based on applying the calculated parameters to the subject image; and

simulating, based on the image processing, an image output by the lensless sensor.

**22.** The method of claim 21, further comprising:

generating a plurality of lensless simulation images imitating encoded images output from the lensless sensor based on the at least one of one or more disturbances and one or more errors; and
creating a lensless simulation image data set.

**23.** The method of claim 22, further comprising:
assigning a label indicating information to be extracted to each lensless simulation image created in the lensless simulation image data set.

**24.** An image processing system, comprising:

information extraction circuitry configured to
receive an image of a subject captured by a lensless image sensor,
extract by a trained machine learning model information from the image, and
output the information.

**25.** The image processing system of claim 24, wherein the received image is an encoded image.

**26.** The image processing system of claim 24, further comprising:

image reconstruction circuitry configured to
receive an encoded image captured by the lensless image sensor,
generate a decoded image from the encoded image, and
output the decoded image to the information extraction circuitry.

**27.** The image processing system of claim 25, further comprising:
a lensless image sensor configured to capture image data, wherein the information extraction circuitry is mounted on the lensless image sensor.

**28.** The image processing system of claim 25, further comprising:

a lensless image sensor configured to capture image data and output an encoded image; and
an information processing device separate from the lensless image sensor, wherein the information processing device includes the information extraction circuitry.

**29.** The image processing system of claim 25, further comprising:

a lensless image sensor configured to capture image data and output an encoded image; and
a cloud server configured to receive the encoded image, wherein the cloud server includes the information extraction circuitry.

**30.** The image processing system of claim 25, wherein the information extraction circuitry includes first information extraction circuitry and second information extraction circuitry and extracts the information in a plurality of stages, the image processing system further comprising:

a lensless image sensor including the first information extraction circuitry, wherein the first information extraction circuitry is configured to

receive an encoded image captured by the lensless image sensor,
in a first stage, extract a first portion of the information, and
output the first portion of the information to the second information extraction circuitry; and

an information processing device separate from the lensless image sensor, wherein the information processing device includes the second information extraction circuitry, wherein the second information extraction circuitry is further configured to

receive the first portion of the information, and
in a second stage, extract a second portion of the information.

# FIG.1

# FIG.2

100

```
┌──────────────┐     ┌──────────┐     ┌──────────────┐     ╭──────────────╮
│  OPTICAL     │     │          │     │   INFOR-     │     │   DESIRED    │
│  MODULA-     │ ──▶ │  PIXEL   │ ──▶ │   MATION     │ ──▶ │ INFORMA-     │
│  TION UNIT   │     │  UNIT    │     │   EXTRAC-    │     │   TION       │
│              │     │          │     │  TION UNIT   │     │              │
└──────────────┘     └──────────┘     └──────────────┘     ╰──────────────╯
      11                 12                 30
```

# FIG.3

30

```
╭─────╮    ┌──────────┐      ┌──────────────┐
│ t=n │    │ SUBJECT  │      │   SUBJECT    │
╰─────╯ ──▶│ DETEC-   │ ──┬─▶│    TYPE      │ ────────────▶
           │ TION UNIT│   │  │  EXTRACTION  │
           └──────────┘   │  │    UNIT      │
              301         │  └──────────────┘
                          │       302
                          │  ┌──────────────┐
                          │  │   SUBJECT    │
                          └─▶│   FEATURE    │
                             │    VALUE     │
                             │  EXTRACTION  │
                             │    UNIT      │
                             └──────────────┘
                                  303
```

```
                                        ┌──────────────┐    ┌──────────────┐
                                        │   SUBJECT    │    │  SUBJECT ID  │
                                        │  IDENTITY    │ ──▶│  ASSIGN-     │ ──▶
                                        │ DETERMINA-   │    │  MENT UNIT   │
                                        │  TION UNIT   │    │              │
                                        └──────────────┘    └──────────────┘
                                             307                 308
```

```
╭───────╮    ┌──────────┐      ┌──────────────┐
│ t=n+1 │    │ SUBJECT  │      │   SUBJECT    │
╰───────╯ ──▶│ DETEC-   │ ──┬─▶│    TYPE      │ ────────────▶
             │ TION UNIT│   │  │  EXTRACTION  │
             └──────────┘   │  │    UNIT      │
                304         │  └──────────────┘
                            │       305
                            │  ┌──────────────┐
                            │  │   SUBJECT    │
                            └─▶│   FEATURE    │
                               │    VALUE     │
                               │  EXTRACTION  │
                               │    UNIT      │
                               └──────────────┘
                                    306
```

# FIG.4

30

t=n

**311** IMAGE RECON-STRUC-TION UNIT

**301** SUBJECT DETEC-TION UNIT

**302** SUBJECT TYPE EXTRACTION UNIT

**303** SUBJECT FEATURE VALUE EXTRACTION UNIT

**307** SUBJECT IDENTITY DETERMINA-TION UNIT

**308** SUBJECT ID ASSIGN-MENT UNIT

t=n+1

**312** IMAGE RECON-STRUC-TION UNIT

**304** SUBJECT DETEC-TION UNIT

**305** SUBJECT TYPE EXTRACTION UNIT

**306** SUBJECT FEATURE VALUE EXTRACTION UNIT

# FIG.5

30

t=n → 301 SUBJECT DETEC-TION UNIT → 302 SUBJECT TYPE EXTRACTION UNIT → 321 IMAGE OUTPUT DETERMI-NATION UNIT → 322 IMAGE RECON-STRUC-TION UNIT →

303 SUBJECT FEATURE VALUE EXTRACTION UNIT

307 SUBJECT IDENTITY DETERMINA-TION UNIT → 308 SUBJECT ID ASSIGN-MENT UNIT →

t=n+1 → 304 SUBJECT DETEC-TION UNIT → 305 SUBJECT TYPE EXTRACTION UNIT → 323 IMAGE OUTPUT DETERMI-NATION UNIT → 324 IMAGE RECON-STRUC-TION UNIT →

306 SUBJECT FEATURE VALUE EXTRACTION UNIT

# FIG.6

START

DETECT SUBJECT FROM ENCODED IMAGE — S1

DETERMINE TYPE OF SUBJECT — S2

S3

DOES TYPE OF SUBJECT CORRESPOND TO TARGET FOR IMAGE OUTPUT?

YES

NO

RECONSTRUCTION FROM ENCODED IMAGE — S5

CROP SUBJECT REGION FROM RECONSTRUCTED IMAGE — S6

OUTPUT INFORMATION ON SUBJECT — S4

END

# FIG.7

LENSLESS SENSOR (101)

100

| OPTICAL MODULA-TION UNIT (11) | → | PIXEL UNIT (12) | → | INFOR-MATION EXTRAC-TION UNIT (30) | → | DESIRED INFORMA-TION |

# FIG.8

100

LENSLESS SENSOR (102)

| OPTICAL MODULA-TION UNIT (11) | → | PIXEL UNIT (12) | → |

INFORMATION PROCESSING DEVICE (103)

| INFOR-MATION EXTRAC-TION UNIT (30) | → | DESIRED INFORMA-TION |

# FIG.9

100

### 102
**LENSLESS SENSOR**

| 11 | 12 |
|---|---|
| OPTICAL MODULA-TION UNIT | PIXEL UNIT |

40
DATA TRANSFER UNIT

### 104
**CLOUD**

30
INFOR-MATION EXTRAC-TION UNIT

DESIRED INFORMA-TION

# FIG.10

100

### 105
**LENSLESS SENSOR**

| 11 | 12 | 31 |
|---|---|---|
| OPTICAL MODULA-TION UNIT | PIXEL UNIT | FIRST INFOR-MATION EXTRAC-TION UNIT |

### 106
**INFORMATION PROCESSING DEVICE**

32
SECOND INFOR-MATION EXTRAC-TION UNIT

DESIRED INFORMA-TION

# FIG.11

110

| 11 | 12 | 13 | 33 |
|---|---|---|---|
| OPTICAL MODULA-TION UNIT | PIXEL UNIT | IMAGE RECON-STRUC-TION UNIT | INFOR-MATION EXTRAC-TION UNIT |

DESIRED INFORMA-TION

# FIG.12

REFERENCE IMAGE
DATA SET

200

TRAINING DATA
GENERATION DEVICE

201

SUBJECT
IMAGE
GENERATION
UNIT

203

PIXEL
OUTPUT
CALCULATION
UNIT

202

OPTICAL
ELEMENT
OPTICAL
CHARACTER-
ISTIC CALCU-
LATION UNIT

LENSLESS
SIMULATION IMAGE
DATA SET

# FIG.13

START

S101
UNREFERENCED IMAGE REMAINS? — NO

YES

S102
ACQUIRE ONE IMAGE FROM REFERENCE IMAGE DATA SET

S103
INPUT ACQUIRED IMAGE TO SUBJECT IMAGE GENERATION UNIT

S104
CALCULATE AND SET OPTICAL ELEMENT OPTICAL CHARACTERISTICS

S105
GENERATE LENSLESS SIMULATION IMAGE

S106
STORE GENERATED IMAGE IN LENSLESS SIMULATION IMAGE DATA SET

END

# FIG.14

REFERENCE IMAGE
DATA SET

200

TRAINING DATA
GENERATION DEVICE

201

SUBJECT
IMAGE
GENERATION
UNIT

202

OPTICAL
ELEMENT
OPTICAL
CHARACTER-
ISTIC CALCU-
LATION UNIT

203

PIXEL
OUTPUT
CALCULATION
UNIT

204

META
INFORMATION
CONVERSION
UNIT

META
INFORMATION

LENSLESS
SIMULATION IMAGE
DATA SET

# FIG.15

ENCODED IMAGE
DATA SET

⌒200

TRAINING DATA GENERATION DEVICE

⌒501

IMAGE
RECON-
STRUCTION
UNIT

RECON-
STRUCTED
IMAGE

⌒502

META
INFORMATION
ASSIGNMENT
UNIT

⌒503

META
INFORMATION
CONVERSION
UNIT

META
INFORMATION

LENSLESS
SIMULATION IMAGE
DATA SET

# FIG.16

START

DETERMINE EFFECTIVE REGION FOR OPTICAL ELEMENT OPTICAL CHARACTERISTICS — S201

CALCULATE CENTER POSITION, WIDTH, AND HEIGHT OF EFFECTIVE REGION FOR OPTICAL ELEMENT OPTICAL CHARACTERISTICS — S202

CALCULATE CENTER POSITION OF EFFECTIVE REGION FOR OPTICAL ELEMENT OPTICAL CHARACTERISTICS AND SHIFT AMOUNT OF IMAGE CENTER — S203

S204
SUBJECT POSITION OF UNPROCESSED SUBJECT EXISTS?    NO

YES

USE CENTER POSITION, WIDTH, AND HEIGHT OF EFFECTIVE REGION TO CONVERT SUBJECT POSITION — S205

END

# FIG.17

# FIG.18

# FIG.19

SUBJECT $\zeta T$

CAPTURE IMAGE OF IDENTICAL SUBJECT

TRAINING DATA GENERATION DEVICE $\zeta 300$

LENSLESS CAMERA $\zeta 301$

NORMAL CAMERA $\zeta 302$

RGB IMAGE

GENERAL-PURPOSE RECOGNITION DEVICE $\zeta 303$

LENSLESS ENCODED IMAGE (QUESTION)

RECOGNITION RESULT (ANSWER)

PAIRING PROCESSING UNIT $\zeta 304$

DATA SET FOR LEARNING

# FIG.20

START

S301
ACQUIRE IMAGE OF
NORMAL CAMERA

S302
DETERMINE PART
CORRESPONDING TO ANGLE OF
VIEW OF NORMAL CAMERA FROM
IMAGE OF LENSLESS CAMERA

S303
CROP PART CORRESPONDING
TO ANGLE OF VIEW OF
NORMAL CAMERA FROM
IMAGE OF LENSLESS CAMERA

S304
RESIZE CROPPED REGION IN
LENSLESS CAMERA TO IMAGE SIZE
FOR NORMAL CAMERA

S305
CONVERT SUBJECT POSITION
INDICATED IN RECOGNITION
RESULT BY NORMAL CAMERA TO
CORRESPOND TO LENSLESS
CAMERA

S306
CORRELATE CORRESPONDENCE
RELATIONSHIP WITH SUBJECT
TYPE TO SUBJECT POSITION
CONVERTED TO CORRESPOND TO
LENSLESS CAMERA

S307
PAIR ENCODED IMAGE OF
LENSLESS CAMERA WITH
RECOGNITION RESULT BY
NORMAL CAMERA

END

# FIG.21

SUBJECT  $\varsigma^T$

CAPTURE IMAGE
OF IDENTICAL
SUBJECT

$\varsigma$300

TRAINING DATA GENERATION DEVICE

$\varsigma$301
LENSLESS
CAMERA

$\varsigma$302
NORMAL
CAMERA

LENSLESS
ENCODED
IMAGE
(QUESTION)

RGB IMAGE
(ANSWER)

$\varsigma$304
PAIRING
PROCESSING
UNIT

DATA
SET FOR
LEARNING

# FIG.22

START

ACQUIRE IMAGE OF
NORMAL CAMERA —S301

DETERMINE PART
CORRESPONDING TO ANGLE OF
VIEW OF NORMAL CAMERA FROM —S302
IMAGE OF LENSLESS CAMERA

CROP PART CORRESPONDING
TO ANGLE OF VIEW OF
NORMAL CAMERA FROM —S303
IMAGE OF LENSLESS CAMERA

RESIZE CROPPED REGION IN
LENSLESS CAMERA TO IMAGE SIZE —S304
FOR NORMAL CAMERA

PAIR ENCODED IMAGE OF
LENSLESS CAMERA WITH IMAGE —S308
OF NORMAL CAMERA

END

# FIG.23

REFERENCE IMAGE
DATA SET

400

LEARNING
DEVICE

410

SETTING
UNIT

401

OPTICAL ELEMENT
OPTICAL
CHARACTERISTIC
SETTING UNIT

OPTICAL
MODULATION
ELEMENT SETTING
INFORMATION

402

IMAGE SENSOR
SETTING UNIT

IMAGE SENSOR
SETTING
INFORMATION

403

ENCODED IMAGE
GENERATION UNIT

404

INFORMATION
EXTRACTION AI

DESIRED
INFORMATION

## INTERNATIONAL SEARCH REPORT

| International application No. |
| --- |
| **PCT/JP2024/031136** |

**A. CLASSIFICATION OF SUBJECT MATTER**

*H04N 23/955*(2023.01)i; *G06T 7/00*(2017.01)i; *G06V 10/70*(2022.01)i; *G06V 10/774*(2022.01)i; *H04N 23/55*(2023.01)i
FI: H04N23/955; G06V10/774; G06V10/70; H04N23/55; G06T7/00 350B

According to International Patent Classification (IPC) or to both national classification and IPC

**B. FIELDS SEARCHED**

Minimum documentation searched (classification system followed by classification symbols)

H04N23/955

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/075527 A1 (OSAKA UNIVERSITY) 22 April 2021 (2021-04-22) paragraphs [0005]-[0039], fig. 1-7 | 1-9, 17, 18, 24-26 |
| A | WO 2018/012492 A1 (SONY CORPORATION) 18 January 2018 (2018-01-18) paragraph [0310] | 1-9, 17, 18, 24-26 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/031136**

**Box No. III        Observations where unity of invention is lacking (Continuation of item 3 of first sheet)**

This International Searching Authority found multiple inventions in this international application, as follows:

Document 1: WO 2021/075527 A1 (OSAKA UNIVERSITY) 22 April 2021 (2021-04-22)
        paragraphs [0005]-[0039], fig. 1-7

Invention 1: Claims 1-9, 17, 18, and 24-26
    Document 1 discloses an invention for determining the sex, age, etc. of a subject through machine learning using a convolutional neural network from an image captured by a lens-less camera provided with a planar modulation element that modulates incident light; as such, claim 1 lacks novelty in light of document 1 and consequently does not have a special technical feature. However, claim 2, which depends from claim 1, has the special technical feature in which "the trained machine learning model is a deep neural network", and claim 3 also has the same technical feature as claim 2. Thus, claims 1-3 are classified as invention 1.
    Claims 4-9 depend from claim 1 and are inventively linked with claim 1, and thus are also classified as invention 1.
    Furthermore, claims 17, 18, and 24-26 are substantially identical or similarly closely related to claim 1, and thus are classified as invention 1.

Invention 2: Claims 10-16 and 19-23
    Claims 10-16 and 19-23 cannot be said to share a same or corresponding technical feature with claim 1 classified as invention 1.
    Moreover, although claims 10-16 depend from claim 1 classified as invention 1, the technical features that are added to claim 1, namely the feature of "acquiring a subject image" and the feature in which "the subject image is inputted or generated from a reference image dataset", have little technical relevance with the technical feature of claim 1, namely the feature "receives an encoded image of a subject captured by a lens-less image sensor, and extracts information from the encoded image by means of a trained machine learning model". For this reason, claims 10-16 are not found to be inventively linked with claim 1.
    Furthermore, claims 10-16 are not substantially identical to or similarly closely related to any of the claims classified as invention 1.
    Accordingly, claims 10-16 cannot be classified as invention 1.
    Claims 10-16 and 19-23 have the special technical features of "acquiring a subject image" and "the subject image is inputted or generated from a reference image dataset", and thus are classified as invention 2.

Invention 3: Claims 27-30
    Claims 27-30 cannot be said to share a same or corresponding technical feature with claim 1 classified as invention 1 or claim 10 classified as invention 2.
    Claims 27-30 do not depend from claim 1. Furthermore, claims 27-30 are not substantially identical to or similarly closely related to any of the claims classified as invention 1 or invention 2.
    Accordingly, claims 27-30 cannot be classified as invention 1 or invention 2.
    Claims 27-30 share the feature in which an "information extraction circuit" is disposed, and thus are classified as invention 3.

**INTERNATIONAL SEARCH REPORT**

| International application No. |
| --- |
| **PCT/JP2024/031136** |

**Box No. III**     **Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-9, 17, 18, 24-26**

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/031136**

| Patent document cited in search report | Publication date (day/month/year) | Patent family member(s) | Publication date (day/month/year) |
|---|---|---|---|
| WO 2021/075527 A1 | 22 April 2021 | (Family: none) | |
| WO 2018/012492 A1 | 18 January 2018 | US 2019/0215473 A1 paragraph [0380]<br>EP 3487165 A1<br>CN 109479101 A<br>KR 10-2019-0022619 A | |

Form PCT/ISA/210 (patent family annex) (July 2022)

44

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019176349 A